(19) Europäisches Patentamt
European Patent Office
Office européen des brevets

(11) EP 1 881 349 A1

(12) **EUROPEAN PATENT APPLICATION**
published in accordance with Art. 153(4) EPC

(43) Date of publication:
**23.01.2008 Bulletin 2008/04**

(21) Application number: **06745560.0**

(22) Date of filing: **21.04.2006**

(51) Int Cl.:
***G02B 5/30*** *(2006.01)* ***C09B 31/08*** *(2006.01)*
***C09B 31/22*** *(2006.01)*

(86) International application number:
**PCT/JP2006/308429**

(87) International publication number:
**WO 2006/115206 (02.11.2006 Gazette 2006/44)**

(84) Designated Contracting States:
**DE**

(30) Priority: **21.04.2005 JP 2005123764**

(71) Applicant: **Mitsubishi Chemical Corporation**
**Minato-ku**
**Tokyo 108-0014 (JP)**

(72) Inventors:
- **NISHIMURA, M.**
**Mitsubishi Chem. Group Science and**
**Aoba-ku**
**Yokohama-shi**
**Kanagawa 2278052 (JP)**
- **HASEGAWA, R.**
**Mitsubishi Chemical Group Science and**
**Aoba-ku**
**Yokohama-shi**
**Kanagawa 2278502 (JP)**
- **SUGIYAMA, K.**
**Mitsubishi Chemical Group Science and**
**Aoba-ku**
**Yokohama-shi**
**Kanagawa 2278502 (JP)**
- **KADOWAKI, M.**
**Mitsubishi Chemical Group Science and**
**Aoba-ku**
**Yokohama-shi**
**Kanagawa 2278502 (JP)**
- **SHIMIZU, Wataru**
**Mitsubishi Chemical Group Sciece &**
**Aoba-ku**
**Yokohama-shi**
**Kanagawa 2278502 (JP)**
- **SANO, Hideo,**
**Mitsubishi Chemical Group Science and**
**Aoba-ku**
**Yokohama-shi**
**Kanagawa 2278502 (JP)**
- **YONEYAMA, T.**
**Mitsubishi Chemical Group Science and**
**Aoba-ku**
**Yokohama-shi**
**Kanagawa 2278502 (JP)**

(74) Representative: **HOFFMANN EITLE**
**Patent- und Rechtsanwälte**
**Arabellastrasse 4**
**81925 München (DE)**

(54) **COMPOSITION FOR ANISOTROPIC DYE FILM, ANISOTROPIC DYE FILM, AND POLARIZING DEVICE**

(57) The present invention provides an anisotropic dye film having a high dichroic ratio.

For this reason, the present invention uses a composition for an anisotropic dye film containing an electron-deficient discotic compound and an electron-rich compound.

EP 1 881 349 A1

## Description

Technical Field

This invention relates to anisotropic dye films having a high dichroic ratio, which are useful for, for example, polarizing plates placed on dimmer devices or display devices such as liquid crystal devices (LCDs) and organic light-emitting devices (OLEDs), compositions for anisotropic dye films capable of producing such anisotropic dye films, and polarizing elements including such anisotropic dye films.

Background Art

LCDs include linearly or circularly polarizing plates, which are used to control optical activity and birefringence during display. Also, OLEDs include circularly polarizing plates, which are used to prevent reflection of external light. Traditionally, iodine has been widely used as a dichroic substance for these polarizing plates (polarizing elements). However, iodine, which readily sublimes, has the following disadvantages: poor thermal stability and lightfastness and degradation of polarization properties over time in the case of application in polarizing elements.

Therefore, polarizing elements containing organic dyes as dichroic substances (dichroic dyes) have been studied, as described, for example, in Patent Document 1 and Nonpatent Documents 1 and 2.

Such dichroic dyes described in these documents can form lyotropic liquid crystal phases in solvents such as water and alcohol, and can readily be aligned on an alignment substrate, or by external fields such as a flow field, an electric field, and a magnetic field. For example, Brilliant Yellow (CI-364) is known to provide a positive dichroic dye film, and Methylene Blue (CI-922) or Amaranth (CI-184) is known to provide a negative dichroic dye film. However, such resultant dichroic dye films have a disadvantage of low dichroism. In addition to deterioration of dichroism caused by Schlieren defects, which are peculiar to liquid crystal, as described in the above documents, and defects induced by distortion on drying, more serious problems remain unsolved even if liquid crystal were completely aligned.

In an ideal state, it is desired that the alignment axis of the liquid crystal is completely parallel to the absorption axis of the dye for positive dichroic dye films whereas the alignment axis is completely perpendicular to the absorption axis for negative dichroic dye films. The alignment axis of the liquid crystal is parallel to the average direction of the longitudinal axis of the aggregated liquid crystal in such a solvent. However, it is difficult to align the longitudinal axis of the aggregation completely parallel or perpendicular to the absorption axis of the dye, for the following reasons.

As described in Nonpatent Document 3, the main factor in aggregation of the dyes in the solvent is interaction between aromatic rings.

As described in Nonpatent Documents 4 and 5, these aromatic rings are not stacked vertically because of the electro-static repulsive force between $\pi$ electrons, but are more stably stacked on a slant. In an aqueous solution, these aromatic rings are vertically stacked to reduce the area of contact between the solvent water and the hydrophobic aromatic rings, which may be more stable in energy. However, such effects can not be expected for anisotropic films prepared by dry-removing the solvent.

Therefore, the relationship between the longitudinal axis of the aggregation and the plane of dye molecules is not perpendicular or parallel, but tends to be in an intermediate state therebetween. When the longitudinal axis of the aggregation forms an angle $\alpha$ with the normal of the plane of dye molecules, positive dichroic dye films are formed at $45° < \alpha \leq 90°$, and negative dichroic dye films are formed at $0° \leq \alpha < 45°$. The angle $\alpha$ has difficulty in being 0° or 90°, and conventionally is any degree between 0° and 90°. Thus, conventional dichroic dye films are not ideal, because these films have finite absorption of any polarized incident light which is parallel or perpendicular to the alignment axis of the film.

To solve such problems, attempts to correct the slant of aggregation of aromatic rings are made by addition of iodine, as described in Nonpatent Document 6. However, the effects are insufficient, and polarizing plates thus prepared have the same disadvantages as conventional iodine-type ones.

[Patent Document 1] US Patent No. 2400877

[Nonpatent Document 1] "The Fixing of Molecular Orientation", J. F. Dreyer, Physical and Colloid Chemistry, 1948, Vol.52, p.808

[Nonpatent Document 2] "Light Polarization from Films of Lyotropic Nematic Liquid Crystals", J. F. Dreyer, Journal de Physique, 1969, Vol.4, p.114

[Nonpatent Document 3] "Chromonic Liquid Crystal Phases", J. Lydon, Current Opinion in Colloid & Interface Science, 1998, Vol.3, p.458-466

[Nonpatent Document 4] "The Nature of $\pi$-$\pi$ Interactions", C. A. Hunter, et al., Journal of the American Chemical Society, 1990, Vol.112, p.5525

[Nonpatent Document 5] "Aromatic Interactions", C. A. Hunter, et al., Journal of the Chemical Society, Perkin Transactions 2, 2001, p.651
[Nonpatent Document 6] "Tetra(tert-butyl)phthalocyanine Cooper-Iodine Complex Film with Large Dichroism Induced by Shear", H. Tanaka, et al., Journal of the Chemical Society, Chemical Communications, 1994, p.1851

Disclosure of Invention

Problems to be solved by the Invention

The present invention has been made in order to solve these problems.
That is, a first object of the present invention is to provide an anisotropic dye film having a high dichroic ratio, a composition for anisotropic dye films capable of producing such an anisotropic dye film, and a polarizing element including such an anisotropic dye film.

Means for solving the Problem

As a result of extensive studies, the inventor has discovered the following fact and accomplished the present invention: A composition containing an electron-deficient discotic compound and an electron-rich compound, or an anisotropic dye film containing these compounds can yield an anisotropic dye film having a high dichroic ratio.
That is, a first aspect of the present invention consists in a composition for an anisotropic dye film comprising an electron-deficient discotic compound and an electron-rich compound (claim 1).
In this case, the electron-rich compound is preferably a dye (claim 2).
In this case, the dye is preferably an azo dye (claim 3).
The electron-deficient discotic compound is preferably an aromatic compound or an azaheterocyclic compound (claim 4).
In addition, the electron-deficient discotic compound is preferably an anthraquinone derivative or an azo dye having an anthraquinone derivative as a partial structure (claim 5).
Preferably, the composition further comprises a solvent (claim 6).
A second aspect of the present invention consists in an anisotropic dye film which comprises the composition for an anisotropic dye film in accordance with the first aspect (claim 7).
A third aspect of the present invention consists in an anisotropic dye film comprising an electron-deficient discotic compound and an electron-rich compound (claim 8).
A forth aspect of the present invention consists in an anisotropic dye film having a tilt angle of 10° or less, the tilt angle being determined from the ratio of polarized absorptions in the following directions (i) and (ii) with respect to a stretching vibration of the $SO_3$ at around 970 $cm^{-1}$(claim 9):

(i) the direction of maximum absorption of visible light, and
(ii) the direction of maximum transmission of the visible light.

A fifth aspect of the present invention consists in an anisotropic dye film having a value YY/YZ of 1.8 or more, the value being the ratio of polarized absorptions in the following directions (i) and (ii) with respect to a CH out-of-plane bending vibration at 800 to 900 $cm^{-1}$ (claim 10):

(i) the direction of maximum absorption of visible light, and
(ii) the direction of maximum transmission of the visible light.

A sixth aspect of the present invention consists in a polarizing element comprising an anisotropic dye film in accordance with the second to fifth aspects (claim 11).

Effects of the Invention

According to the present invention, compositions containing electron-deficient discotic compounds and electron-rich compounds, or anisotropic dye films containing these compounds can yield anisotropic dye films having a high dichroic ratio.

Best Mode for Carrying Out the Invention

The present invention will now be described by reference to the best mode for carrying out the invention (hereinafter referred to as preferred embodiments of the invention), but is not limited to the preferred embodiments

below. Various variations can be made within the spirit of the invention.

The phrase "anisotropic dye film" as used herein refers to dye films anisotropic in electromagnetic characteristics in arbitrary two directions selected from three directions in a three-dimensional coordinate system consisting of the thickness direction and arbitrary two orthogonal in-plane directions of a dye film. The electromagnetic characteristics include optical properties such as absorption and refraction, and electrical properties such as resistance and capacitance. Examples of the films anisotropic in optical properties such as absorption and refraction include linearly polarizing films, circularly polarizing films, phase retardation films, and anisotropic conductive films. That is, the present invention is preferably applied to polarizing films, phase retardation films, anisotropic conductive films, and more preferably to polarizing films.

[I. Electron-Deficient Discotic Compound]

Now, electron-deficient discotic compounds used for compositions for anisotropic dye films and anisotropic dye films of the present invention will be described. The electron-deficient discotic compounds may be hereinafter referred to as "materials for the anisotropic dye films of the present invention" or "materials for the present invention".

"Electron-deficient discotic compounds" in the present invention include dyes having an electron-deficient discotic partial structure. The electron-deficient discotic compounds may be hereinafter referred to as "dyes for the anisotropic dye films of the present invention" or "dyes for the present invention".

[I-1. Electron-Deficient Discotic Compound (Materials for the Anisotropic Dye Films of the Present Invention)]

"The electron-deficient discotic compounds" as used herein refer to compounds having a discotic partial structure which has relatively high electron affinity, preferably has a quadrupole moment $Q_{zz}$ of $-20 \times 10^{-40}$ $Cm^2$ or more which is larger than that of benzene, and more preferably has a positive quadrupole moment $Q_{zz}$, wherein z represents a coordinate axis perpendicular to the molecular plane of a discotic compound, as described, for example, in Reference 1 ("An Electron-Deficient Discotic Liquid-Crystalline Material", K. Pieterse, et al., Chemistry of Materials, 2001, Vol.13, p.2675).

The quadrupole moment is a tensor quantity which is represented by the following volume integral using a charge density ρ at a relative position r=(x,y,z) from the center of gravity of the molecule.

[Equation 1]

$$\tilde{\mathbf{Q}} = \frac{1}{2}\int\left(3\overline{\mathbf{r}}\overline{\mathbf{r}} - \overline{\mathbf{r}}^2\,\overline{\mathbf{1}}\right)\rho d\tau$$

Such molecules which are symmetrical to the z axis as benzene are referred to as uniaxial quadrupoles. The intensity is a scalar quantity Q represented by the following equation, which is equivalent to $Q_{zz}$ being the zz component of the tensor quantity.

[Equation 2]

$$Q = \frac{1}{2}\int\left(2z^2 - x^2 - y^2\right)\rho d\tau$$

The electrostatic interactions between the discotic molecules stacked in the z direction are significantly affected by the value $Q_{zz}$ of the zz component. Table 1 below shows $Q_{zz}$ for representative discotic compounds. These values of the quadrupole moment can be determined, for example, by quantum mechanical calculation described in References 2 to 6, or methods described in Reference 7.

[Table 1]

Table 1

| | $Qzz/10^{-40}$ $Cm^2$ | Reference |
|---|---|---|
| pyrene | -68.5 | 6 |
| anthracene | -61.1 | 6 |
| phenanthrene | -60.6 | 6 |
| biphenyl(θ = 0°) | -53.6 | 6 |
| naphthalene | -44.4 | 6 |
| biphenyl(θ = 45°) | -41.7 | 6 |
| benzene | -29.7 | 3 |
| benzene | -27.9 | 2 |
| toluene | -26.4 | 2 |
| 1,4-xylene | -25.6 | 2 |
| anthracene | -23.0 | 4 |
| pyridine | -18.4 | 3 |
| 1,2-difluorobenzene | -14.6 | 2 |
| 1,3-difluorobenzene | -10.1 | 2 |
| pyridazine | -8.0 | 3 |
| 1,4-difluorobenzene | -7.3 | 2 |
| pyrazine | -6.6 | 3 |
| pyrimidine | -6.4 | 3 |
| benzonitrile | -5.2 | 2 |
| vinylene carbonate | 0.7 | 5 |
| 1,3,5-trifluorobenzene | 1.8 | 2 |
| s-triazine | 6.0 | 3 |
| coumarin 153 | 6.3 | 2 |
| 1,2,4,5-tetrafluorobenzene | 12.5 | 2 |
| s-tetrazine | 14.6 | 3 |
| maleic anhydride | 19.0 | 5 |
| anthraquinone | 20.0 | 4 |
| hexafluorobenzene | 31.5 | 2 |

Reference 2: "The Molecular Electric Quadrupole Moment and Solid-State Architecture", J. H. Williams, Acc. Chem. Res., 1993, Vol.26, p.593.
Reference 3: "The electric structure of the azabenzenes an AB initioMO-SCF-LCAO study", J. Almlof et al., J. Electron Spectroscopy and Related Phenomena, 1973, Vol.2, p.51.
Reference 4: "Multiple contributions to potentials of mean torque for solutes dissolved in liquid crystal solvents", J. W. Emsley et al., Liquid Crystals, 1991, Vol.9, p.649.
Reference 5: "The Molecular Zeeman Effect", D. H. Sutter, W. H. Flygare, Topics in Current Chemistry, 1976, Vol.63, p.89.
Reference 6: "Quadrupole Moment Calculations for Some Aromatic Hydrocarbons", A. Chablo et al., Chemical Physics Letters, 1981, Vol.78, p.424.
Reference 7: A. D. Buckingham, Advances in Chemical Physics, 1967, Vol.12, p.107.

As shown in the Table 1, it is known that electron-rich discotic compounds such as benzene have negative quadrupole moments while electron-deficient discotic compounds such as hexafluorobenzene and anthraquinone have positive quadrupole moments.

As described in Reference 8 ( "Computer Simulation Studies of Anisotropic Systems XXIX. Quadrupolar Gay-Berne Discs and Chemically Induced Liquid Crystal Phases", M. A. Bates, et al., Liquid Crystals, 1998, Vol.24(2), p. 229), it is known that when discotic compounds having different signs of quadrupole moments respectively come close to each other, these compounds are stably aligned in parallel with each other without slant to form stable aggregation.

For compounds having a complicated charge distribution like fused polycyclic compounds having a relatively high molecular weight, although it is not necessarily accurate that the quadrupole moment interaction of the compound as a whole is considered, the sum of quadrupole moment interactions in individual sites of the compound can be considered as described in Reference 9 ("Complementary Polytopic Interactions (CPI) as Revealed by Molecular Modeling using the XED Force Field", O. R. Lozman, et al., Journal of the Chemical Society, Perkin Transactions 2, 2001,

p.1446).

As mentioned above, according to the present invention, use of electron-deficient discotic compounds as materials for anisotropic dye films can reduce the static repulsive force between π electrons, and produce aggregations stacked vertically without slant. This may make the angle α defined by the longitudinal axis of the aggregation and the normal of the dye molecular plane close to 0°, resulting in ideal dichroic dye films.

Examples of the electron-deficient discotic compounds that can be used as materials for the present invention include aromatic compounds or azaheterocyclic compounds, which have highly electron-affinic substituents.

Examples of the aromatic compounds include benzenes (e.g. perfluorobenzene, benzoquinone, cyanobenzene, nitrobenzene, phthalimide, and cyanoquinomethane), naphthalenes (e.g. perfluoronaphthalene, naphthoquinone, cyanonaphthalene, nitronaphthalene, and cyanonaphthoquinomethane), anthracenes (e.g. anthraquinone), fluorenes (e.g. nitrofluorenone), and perylenes (e.g. perylenediimide).

Examples of the azaheterocyclic compounds include pyridine, pyrazine, pyrimidine, 1,3,5-triazine, indole, isoindole, quinoline, isoquinoline, and quinoxaline.

Examples of the highly electron-affinic substituent include oxo, cyano, nitro, halogen (e.g. fluorine and chlorine), sulfo, carboxy, and alkali metal (e.g. sodium) or alkaline-earth metal salts of sulfo or carboxy.

Examples of the electron-deficient discotic compounds include compounds having one or more of ring structures derived from aromatic compounds or azaheterocyclic compounds which have one or more of the highly electron-affinic substituents mentioned above.

The electron-deficient discotic compounds have preferably 33% by mole or more, and more preferably 50% by mole or more of partial ring structures derived from aromatic compounds or azaheterocyclic compounds which have one or more of the highly electron-affinic substituents in one molecule.

As used herein, the level of the ring structure (s) (partial structure) in one molecule (% by mole) is calculated from the number of the ring structures in one molecule.

For example, the following compound has one ring structure having highly electron-affinic substituents in one molecule, and the level of the ring structure in one molecule (% by mole) is therefore 100% by mole.

[Compound 1]

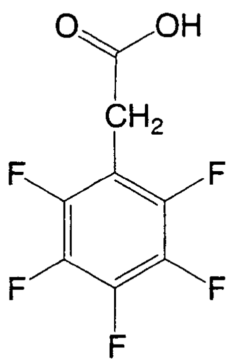

The following compound has three ring structures in one molecule, and two of these rings (quinoline rings at both ends) are azaheterocyclic compounds. The level of the ring structures in one molecule (% by mole) is therefore 67% by mole (2/3).

[Compound 2]

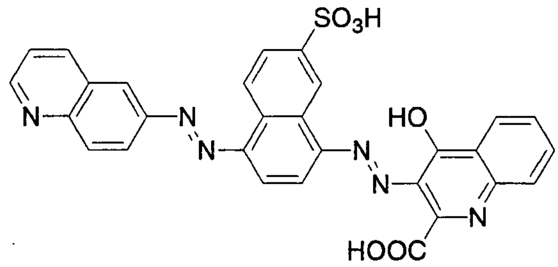

For compounds which have different structures but have an equal level of the ring structure (s) in one molecule (% by mole), the degree of the electron-deficiency is further determined by the value of the quadrupole moment.
Electron-deficient discotic compounds used as materials for the present invention may also be dyes.
Preferably, materials for the present invention have a solubility of 0.1% or more in solvents mentioned below since anisotropic dye films are formed by a wet film-forming process using solvents.
When the electron-deficient discotic compounds used as materials for the present invention are dyes, the dyes have electron-deficient discotic partial structures.
The phrase "electron-deficient discotic partial structure" as used herein, means partial structures which have relatively high electron affinity and have a negative quadrupole moments like the "electron-deficient discotic compound" described in the above section [I-1. Materials for the Anisotropic Dye Films of the Present Invention]. That is, the dyes of the present invention have such partial structures in one molecule.
Examples of the electron-deficient discotic partial structures include the partial structures derived from the aromatic compounds or azaheterocyclic compounds illustrated above, as well as the highly electron-affinic substituents illustrated above.
Preferred specific examples of the electron-deficient discotic compounds that can be used as materials for the present invention (including dyes having electron-deficient discotic partial structures) include compounds represented by the following formulae. However, the electron-deficient discotic compounds that can be used as materials for the present invention are not intended to be limited to these examples.
The electron-deficient discotic compounds represented by the following formulae are illustrated in the form of free acid, and may be used in the form of free acid as they are, or part of their acid moieties may be in the salt form. Examples of the salt form include salts of alkali metal such as Na, Li, and K, ammoniums salts optionally substituted by alkyl or hydroxyalkyl, and organic amine salts. Examples of the organic amines include lower alkylamines of 1 to 6 carbon atoms, hydroxy-substituted lower alkylamines of 1 to 6 carbon atoms, and carboxy-substituted lower alkylamines of 1 to 6 carbon atoms. In such salt forms, not only one type of salt but also several types may be present at the same time.

[Compound 3]

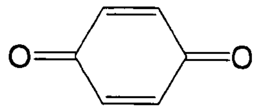

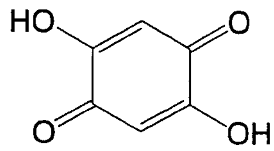

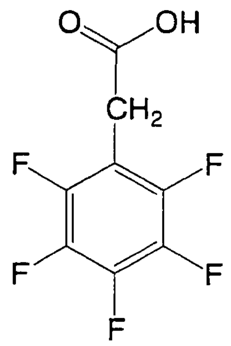

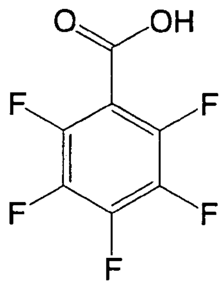

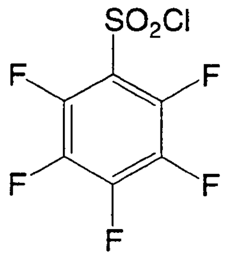

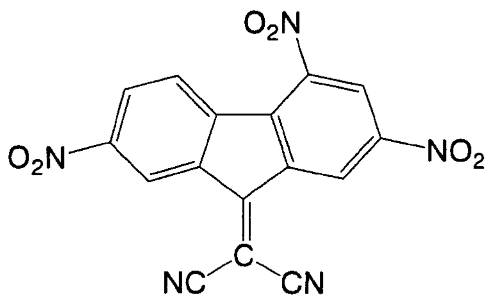

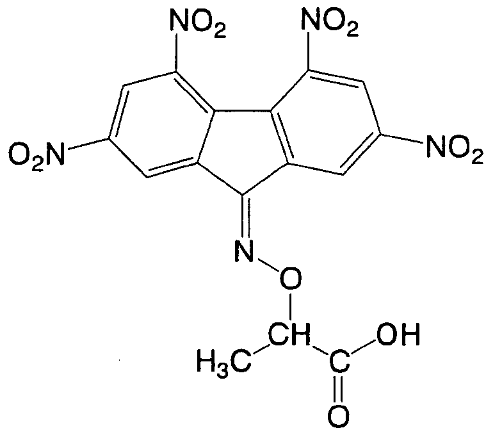

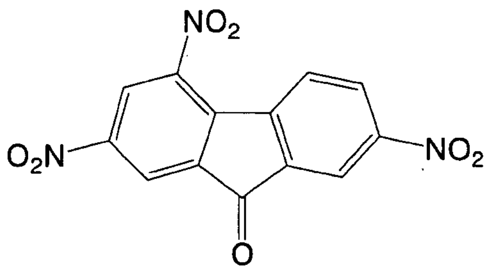

[Compound 4]

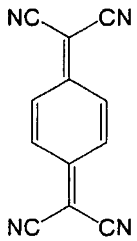

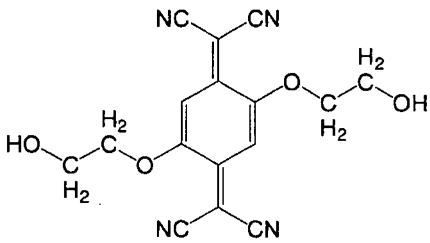

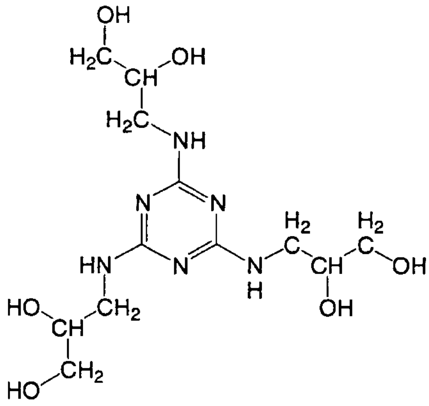

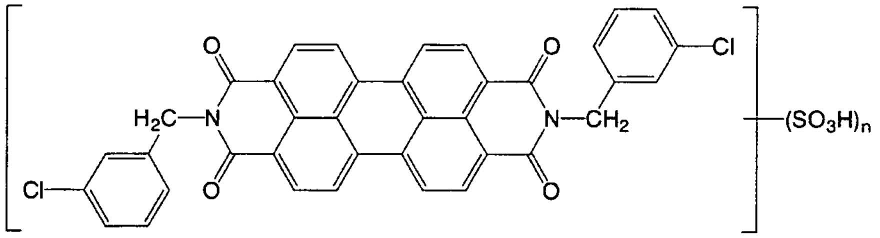

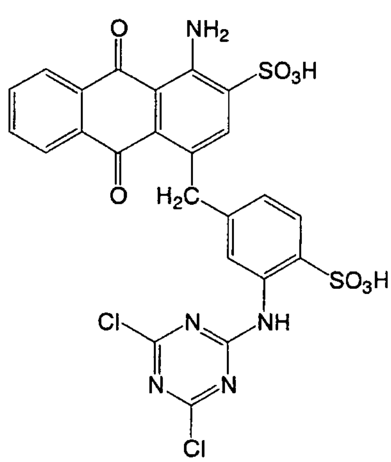

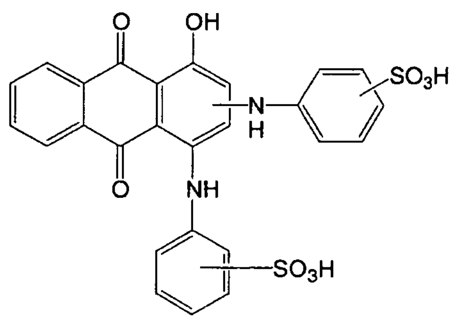

[Compound 5]

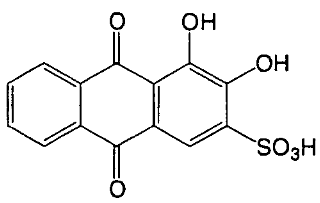

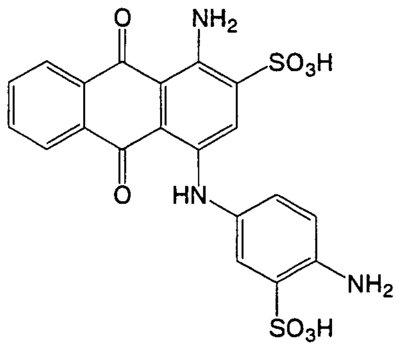

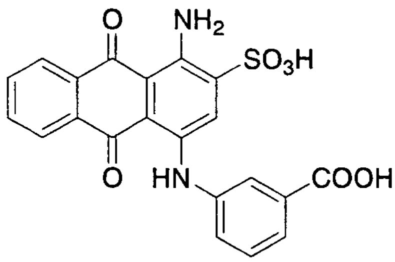

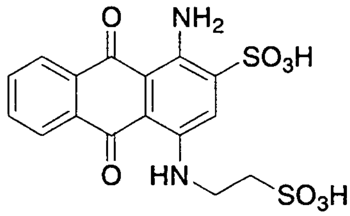

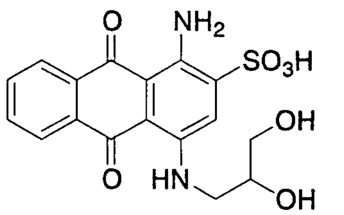

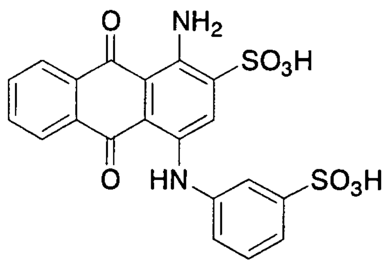

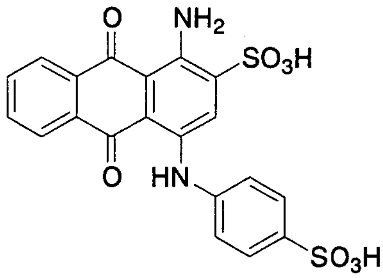

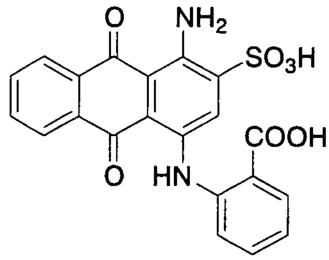

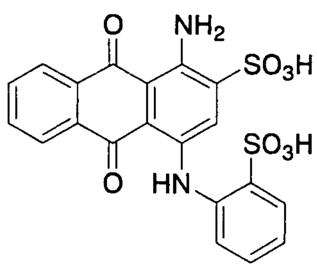

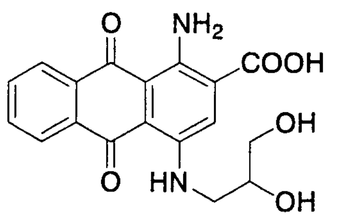

[Compound 6]

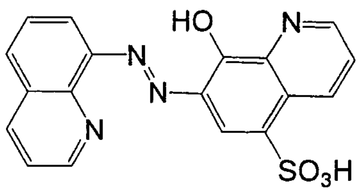

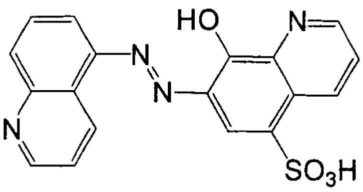

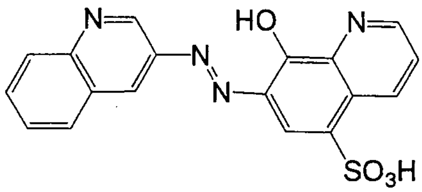

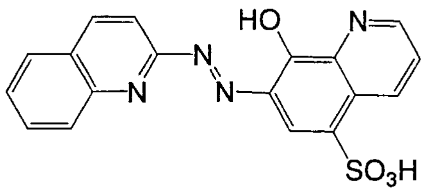

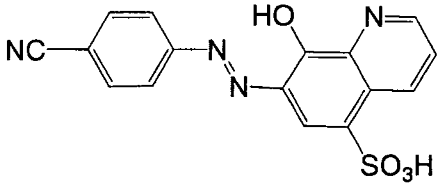

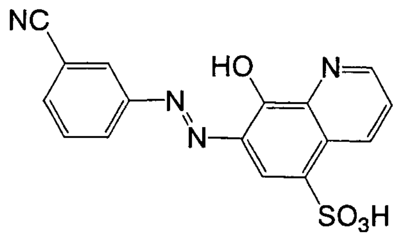

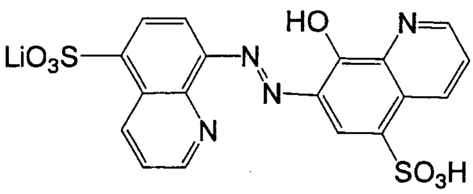

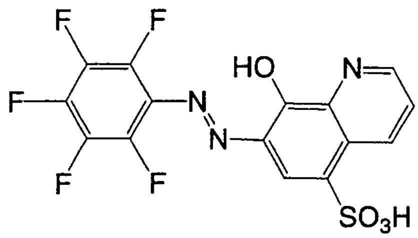

[Compound 7]

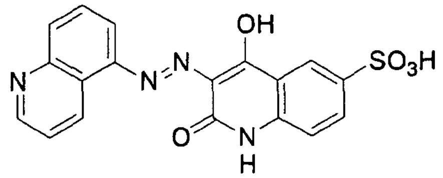

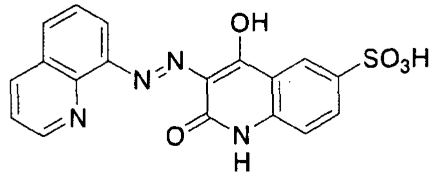

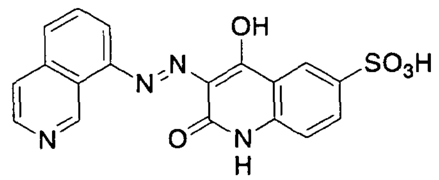

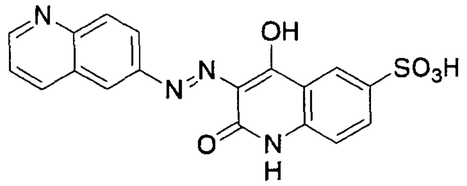

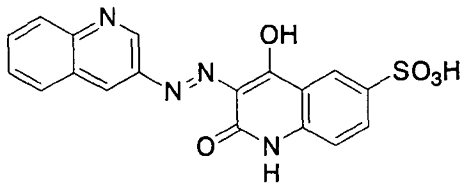

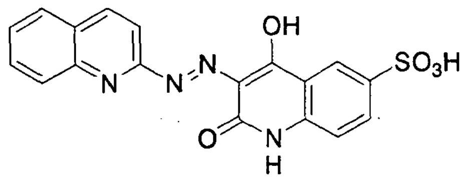

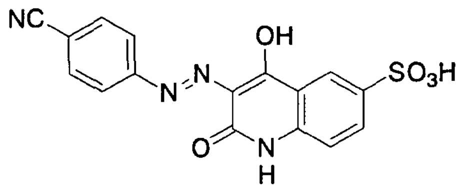

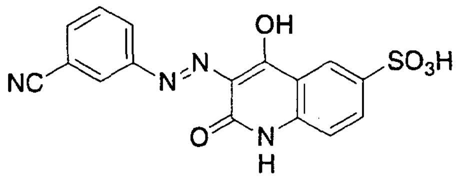

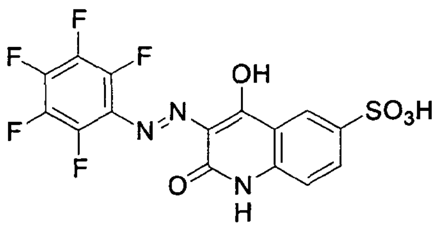

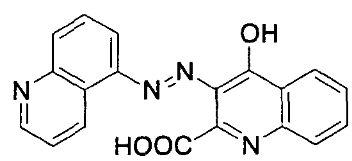

[Compound 8]

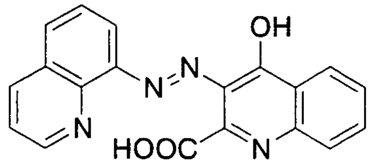

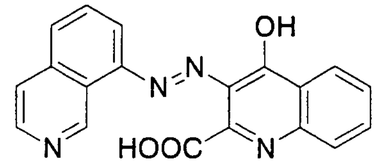

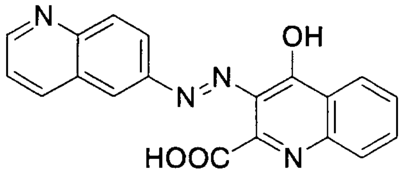

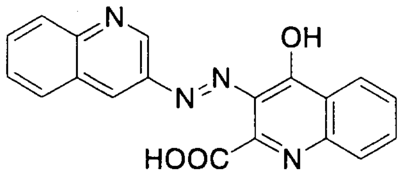

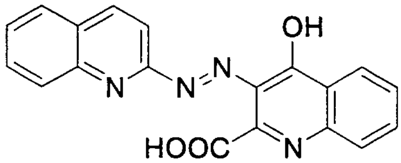

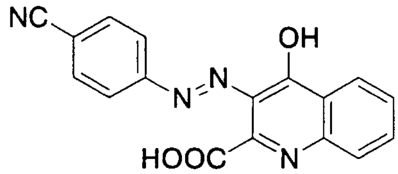

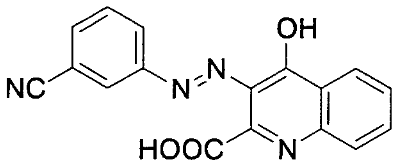

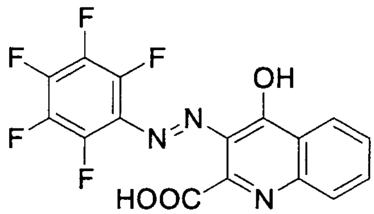

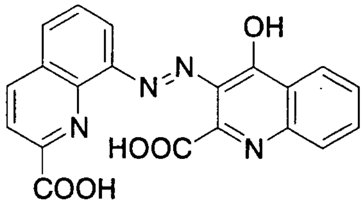

[Compound 9]

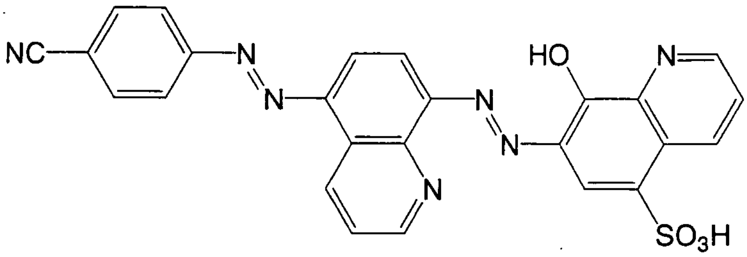

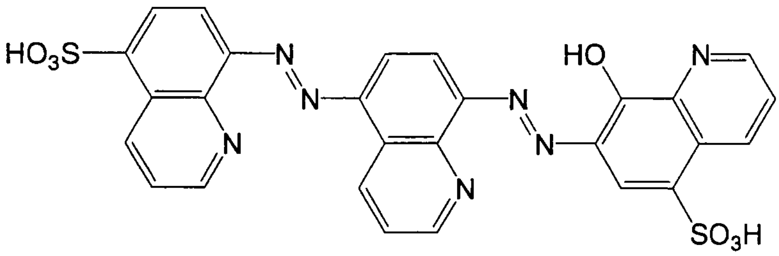

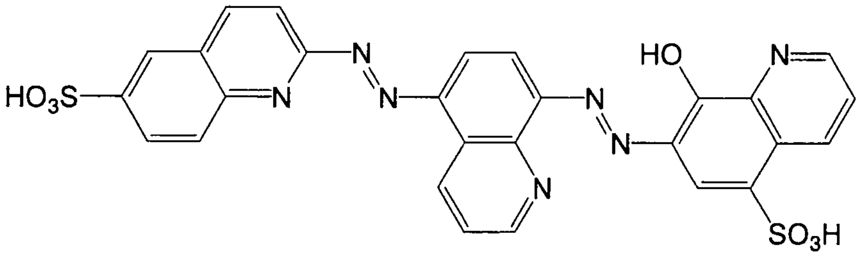

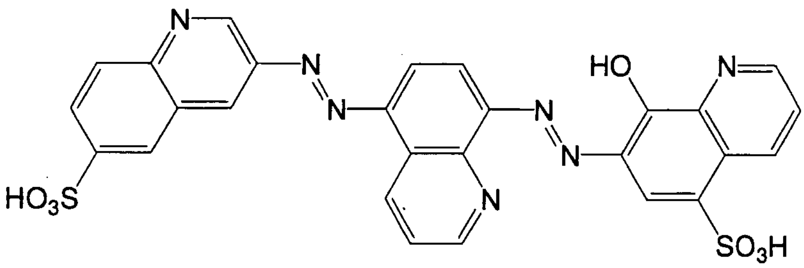

[Compound 10]

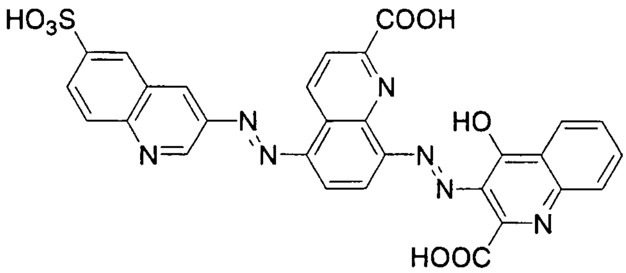

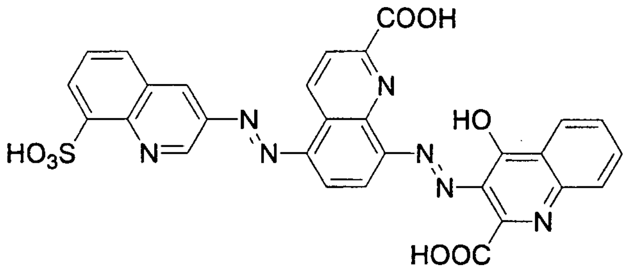

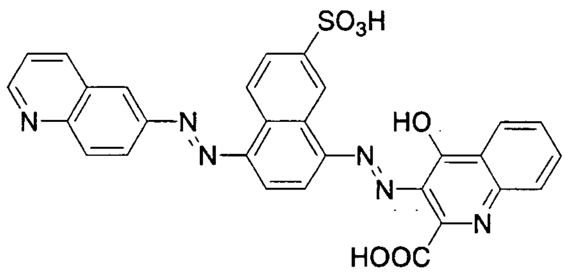

[Compound 11]

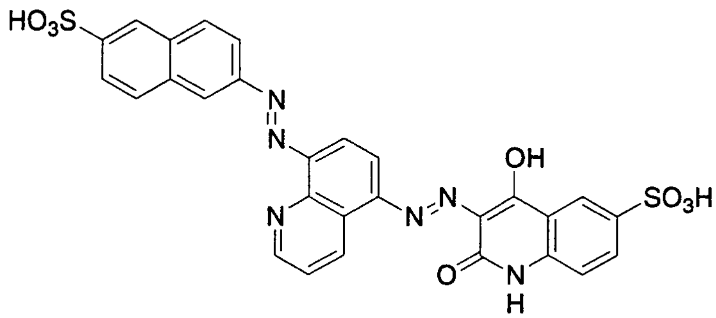

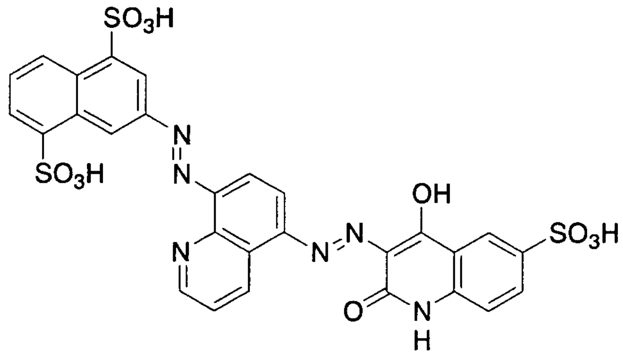

Compounds represented by the following formulae (wherein $A^1$, $B^1$, $B^2$, and $D^1$ are each selected from the following groups, respectively):

[Compound 12]

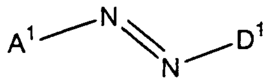

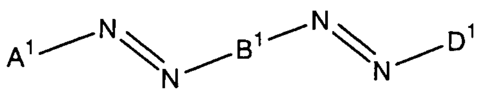

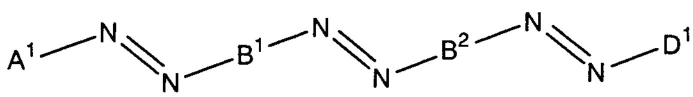

[Compound 13]

(Group A[1])

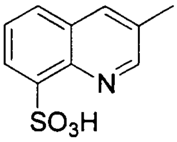
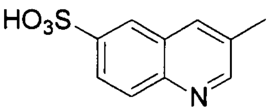
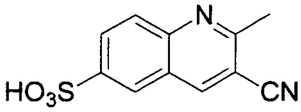
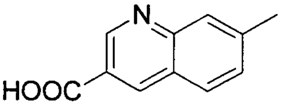
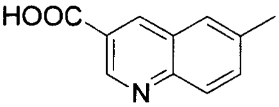
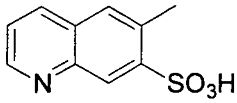
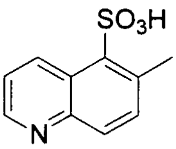
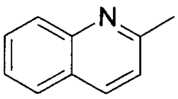
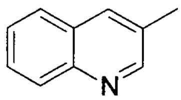
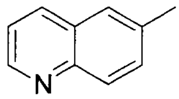
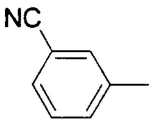
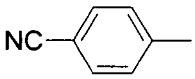
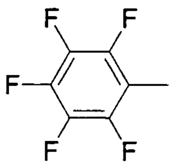
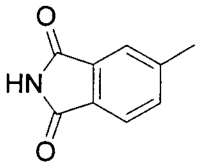
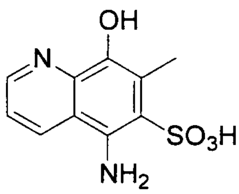
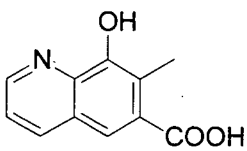
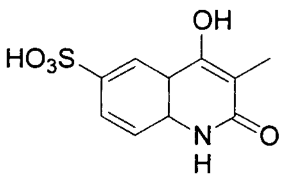
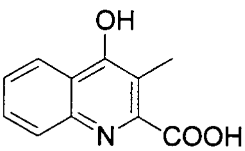
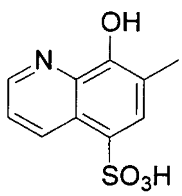
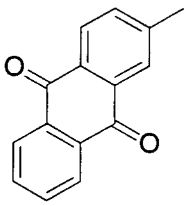
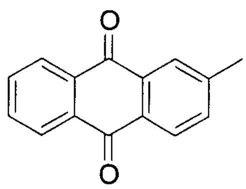

[Compound 14]

(Group $B^1$、$B^2$)

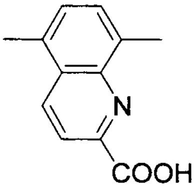
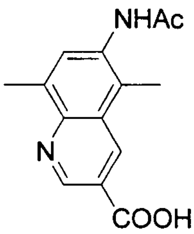
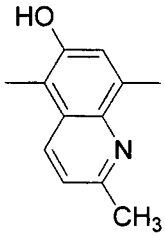
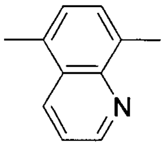
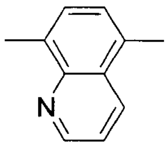
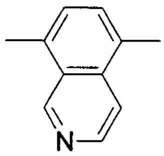
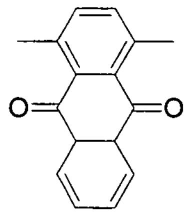

[Compound 15]

(Group $D^1$)

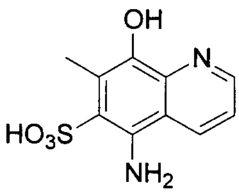
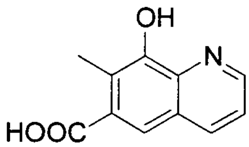
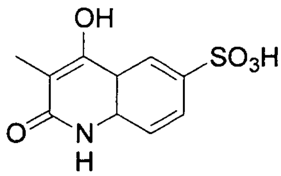
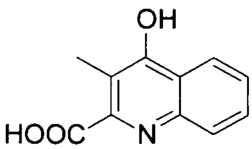
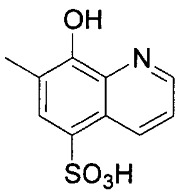

[Compound 16]

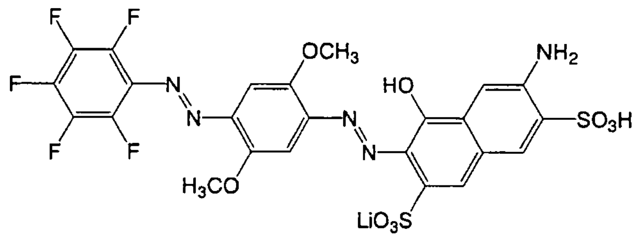

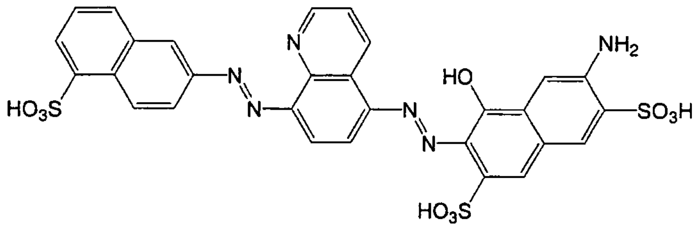

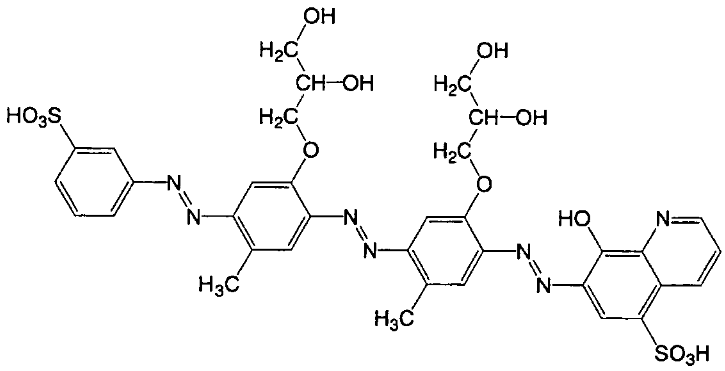

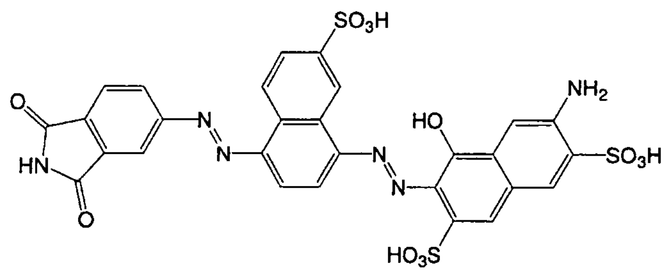

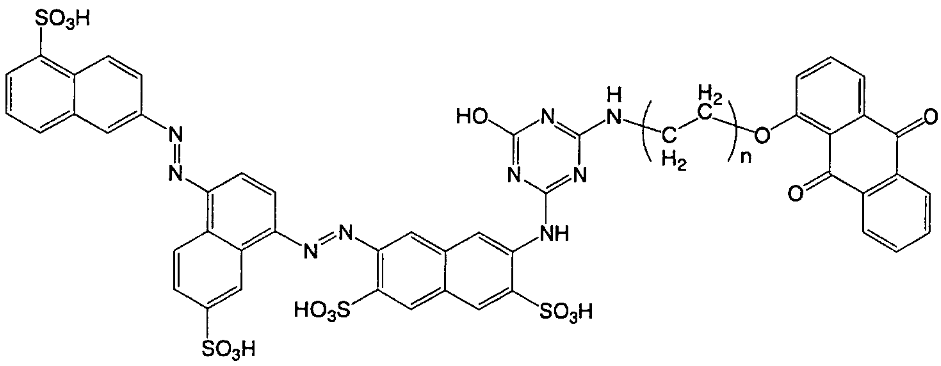

[Compound 17]

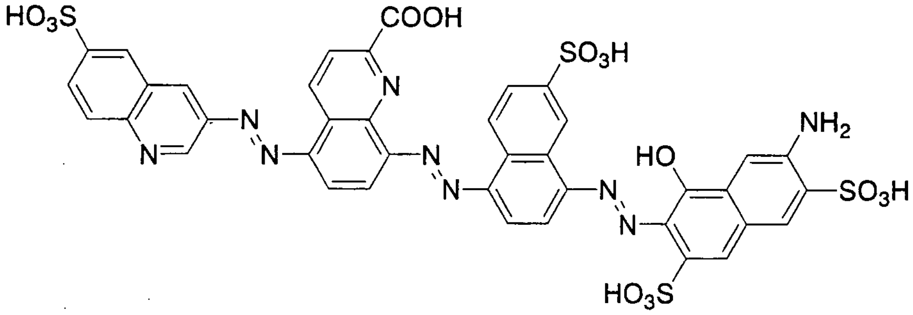

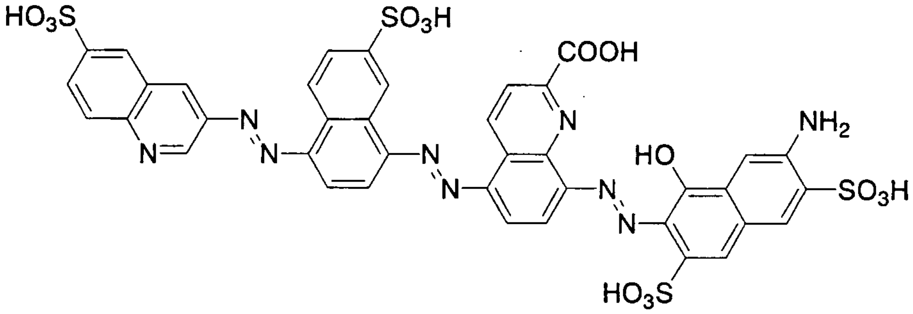

These exemplary compounds also include possible stereoisomers such as optical isomers thereof.

Preferably, the compounds have a solubility of 1% or more by weight in the solvents mentioned below, and also form lyotropic liquid crystal phases at a concentration in the range from 1 to 50% by weight.

Among the electron-deficient discotic compounds preferred are azo dyes consisting of anthraquinone derivatives or containing anthraquinone derivatives as partial structures due to dichroism of the resulting films.

[II. Composition for Anisotropic Dye Film]

The composition for anisotropic dye films of the present invention is used for forming anisotropic dye films, and contains an electron-deficient discotic compound and an electron-rich compound. The composition generally contains a solvent and any other required component.

(i) Solvent:

Solvents include water, water-miscible organic solvents, and mixtures of water and water-miscible organic solvents. Specific examples of the organic solvents include alcohols such as methyl alcohol, ethyl alcohol, and isopropyl alcohol; glycols such as ethylene glycol and diethylene glycol; and cellosolves such as methyl cellosolve and ethyl cellosolve. The solvents may be used either alone or in an arbitrary combination thereof at an arbitrary proportion.

(ii) Electron-Deficient Discotic Compound:

The compositions contain electron-deficient discotic compounds mentioned above. The compounds may be used either alone or in an arbitrary combination thereof at an arbitrary proportion.

The electron-deficient discotic compounds are present in the composition of the present invention in an amount of generally 0.1 parts by weight or more and preferably 0.2 parts by weight or more, and generally 50 parts by weight or less and preferably 40 parts by weight or less on the basis of 100 parts by weight of the entire composition. Below the lower limit, use of the electron-deficient discotic compounds will result in no effects which would otherwise be obtained. Above the upper limit, the compound may produce a significantly viscous solution, which is hard to handle.

(iii) Electron-Rich Compound (Dye):

The composition of the present invention contains an electron-rich compound, which is generally a dye (hereafter sometimes referred to as "electron-rich dye"). The electron-rich dye refers to a dye containing a discotic partial structure which has relatively low ionization potential and has a quadrupole moment $Q_{zz}$ of less than $-20\times10^{-40}$ $Cm^2$ in an amount of 50% by mole or more, as described in the above Reference 1. The quadrupole moment $Q_{zz}$ is as described above.

Examples of the electron-rich dyes used for the composition of the present invention include azo dyes, stilbene dyes, cyanine dyes, phthalocyanine dyes, and fused polycyclic dyes (perylenes and oxazines). In particular, preferred are azo dyes composed of aromatic hydrocarbons such as benzenes and naphthalenes substituted by, for example, alkyl, alkoxy, sulfone, and amino; porphyrins; and phthalocyanines. Especially preferred are azo dyes.

Specific preferred examples of the electron-rich dyes used for the composition of the present invention include

dyes represented by the following formulae (wherein these formulae are all illustrated in the form of free acid). However, the electron-rich dyes that can be used for the composition of the present invention are not limited to these examples.

[Compound 18]

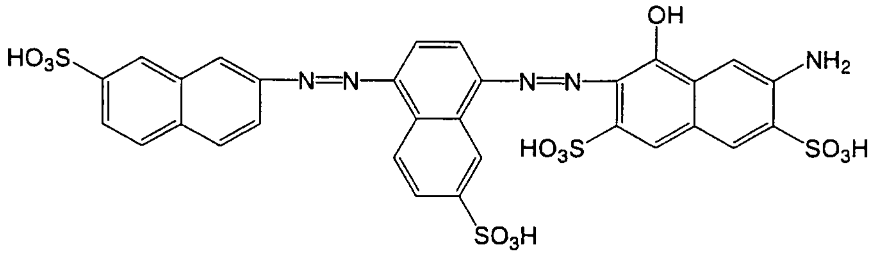

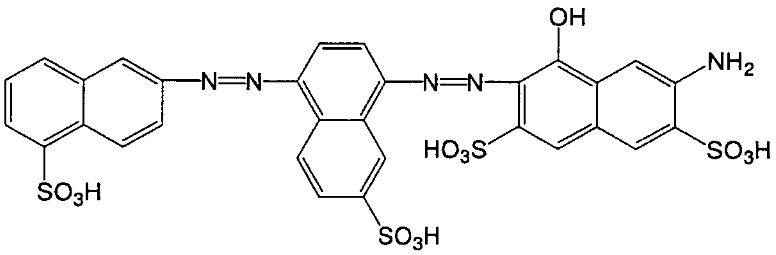

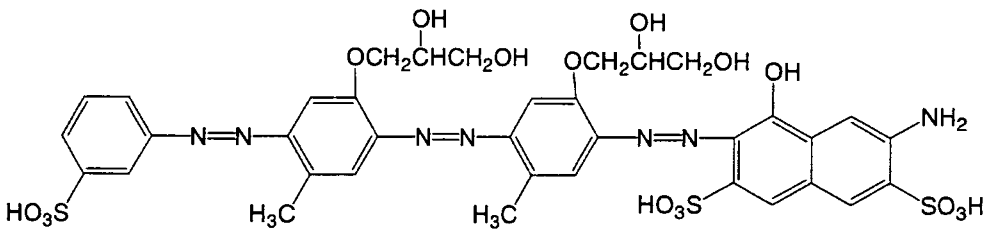

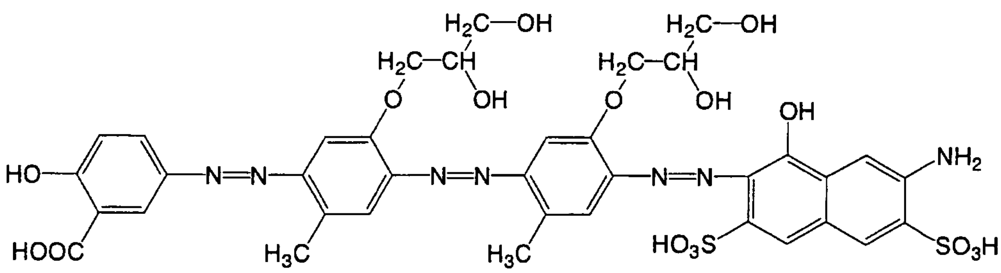

[Compound 19]

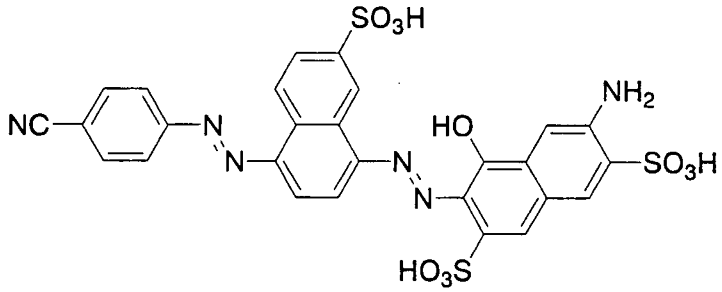

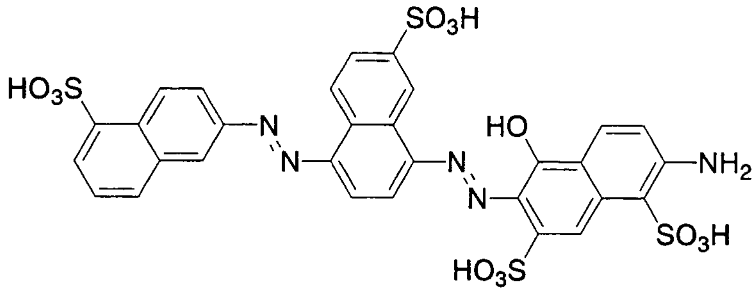

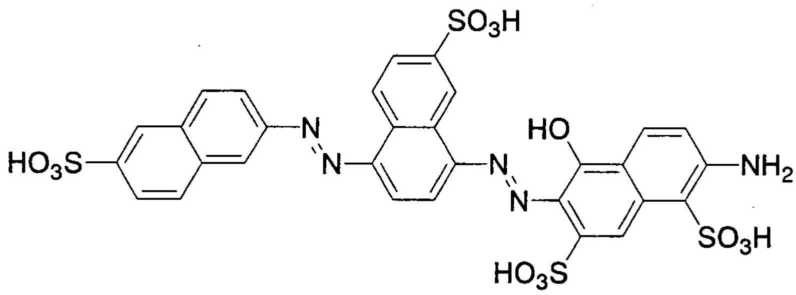

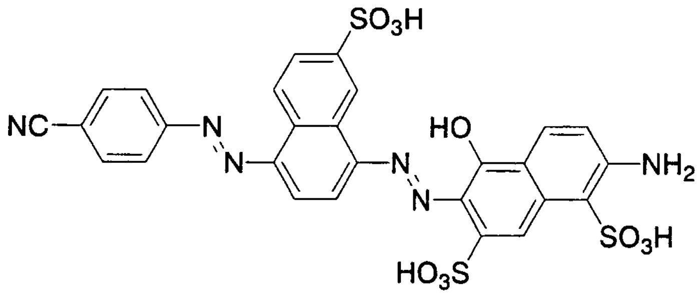

[Compound 20]

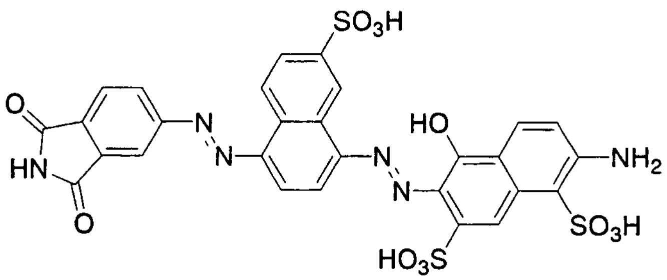

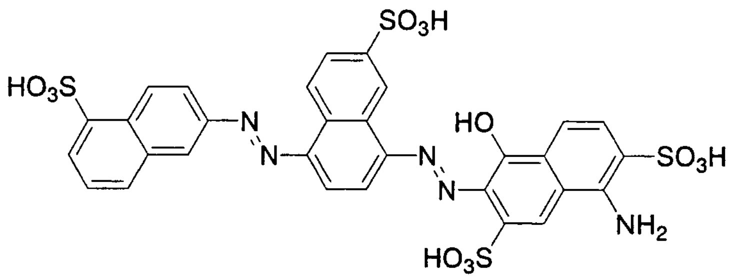

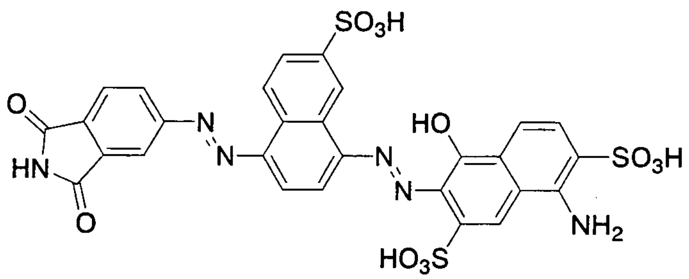

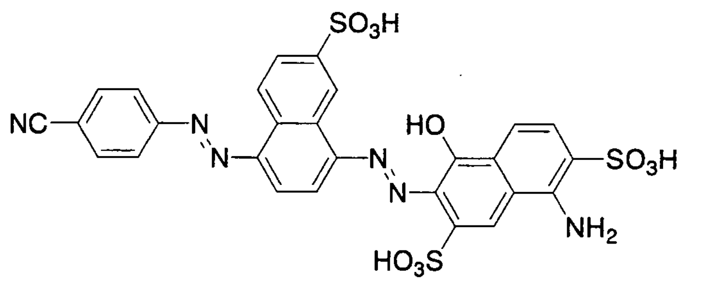

[Compound 21]

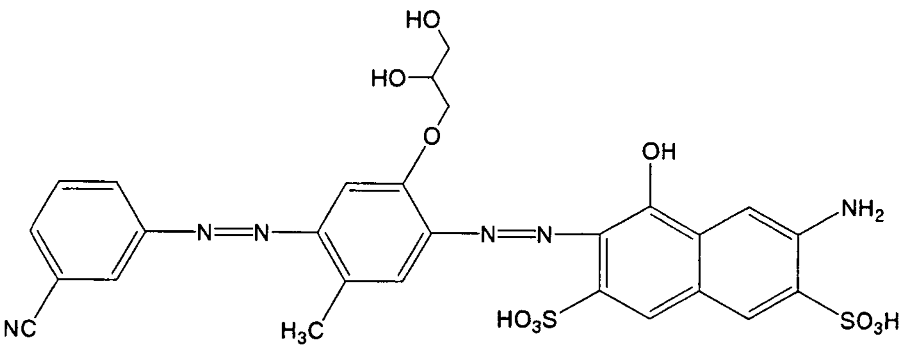

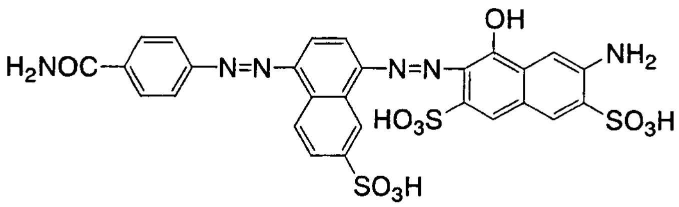

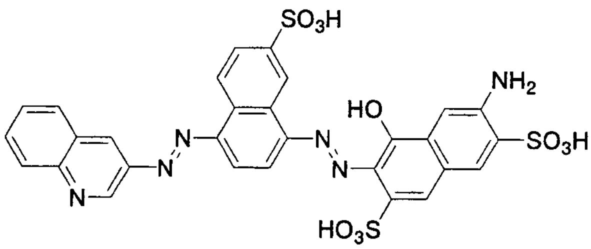

These exemplary electron-rich dyes also include possible stereoisomers such as optical isomers thereof.

The exemplary electron-rich dyes may be used either alone or in an arbitrary combination thereof at an arbitrary proportion.

Preferably, the electron-rich dyes used for the composition of the present invention are compounds which have generally a solubility of 0.1% or more and especially 1% or more in the solvents mentioned above, and also form lyotropic liquid crystal phases at a concentration in the range from 0.1 to 50%.

From the view point of color tone and production, the preferred molecular weight of the electron-rich dye is generally 200 or more and especially 350 or more, and generally 5000 or less and especially 3500 or less in the form of not salt but free acid.

The electron-rich dyes may be used in the form of free acid, or part of their acid moieties may be in the salt form. The dyes in the form of salt may be present with ones in the form of free acid. When the dyes are produced in salt form, they can be used either directly or after being converted into desired salt forms.

Examples of the salt form include salts of alkali metals such as Na, Li, and K, ammoniums salts optionally substituted by alkyl or hydroxyalkyl, and organic amine salts. Examples of the organic amines include lower alkylamines of 1 to 6 carbon atoms, hydroxy-substituted lower alkylamines of 1 to 6 carbon atoms, and carboxy-substituted lower alkylamines of 1 to 6 carbon atoms. For such salt forms, not only one type of salt but also several types may be present.

The electron-rich dye is present in a composition of the present invention in an amount of generally 50 parts by weight or less and preferably 40 parts by weight or less based on 100 parts by weight of the entire composition. Above the upper limit, the compound may produce a significantly viscous solution, which is hard to handle.

Preferably, the weight ratio of the electron-deficient discotic compound to the electron-rich dye is generally in the range from 10/90 to 90/10. Beyond the range, use of the electron-deficient discotic compound or the electron-rich dye can result in no effect which would otherwise be obtained, which is not preferred.

(iv) Other Component:

The composition of the present invention may contain other components in addition to the solvents, electron-deficient discotic compounds and the electron-rich dyes mentioned above.

For example, when a substrate is coated with a composition of the present invention as a solution for forming dye films by a wet film-forming process described below, the composition may contain a surfactant as necessary in order

to improve wettability to the substrate and coating properties. Any of anionic, cationic, and nonionic surfactants can be used. Preferably, the concentration of surfactant in the composition of the present invention is generally 0.05% by weight or more and 0.5% by weight or less.

Additives such as amino acid and hydroxylamine can be used for the purpose of enhancing aggregation of the dyes or reducing defects in the anisotropic dye films.

Besides the above, the known additives described in Reference 10 ("Additives for Coating", Edited by J. Bieleman, Willey-VCH, 2000) may also be used.

Preferably, the weight ratio of the electron-deficient site and the electron-rich site to the total components in the composition of the present invention is within the range of generally 5/95 or more and preferably 35/65 or more, and generally 95/5 or less and preferably 65/35 or less. Beyond the range, the respective effects of the components used can be hard to show up, which is not preferred.

[III. Anisotropic Dye Film]

Now, the anisotropic dye film of the present invention will be described in terms of characteristics of its composition, production, and physical properties. The anisotropic dye film of the present invention preferably satisfies all of these characteristics, however, may satisfy any one of these characteristics without satisfying the rest of them or with the rest of them proved unknown.

[III-1. Composition of the Anisotropic Dye Film]

In view of its composition, the anisotropic dye film of the present invention comprises an electron-deficient discotic compound and an electron-rich compound. The electron-deficient discotic compound and the electron-rich compound are as described above. The ratio of these compounds is not particularly limited.

The anisotropic dye film of the present invention may further comprise other components. Examples of the other components include those components contained in the composition of the present invention mentioned above.

[III-2. Production of the Anisotropic Dye Film]

In view of its production, the anisotropic dye film of the present invention is produced with the composition for an anisotropic dye film of the present invention (the composition of the present invention). Specifically, the anisotropic dye film of the present invention can be made by film-forming using the composition of the present invention mentioned above. Any of dry film-forming processes and wet film-forming processes may be used as the film-forming process, and preferably a wet film-forming process is used when the composition of the present invention (an aqueous solution) used for film-forming can exhibit liquid crystallinity.

(i) Dry Film-Forming Process:

A dry film-forming process includes forming an unstretched film with a composition of the present invention and a high molecular weight polymer, and stretching the resulting unstretched film. Examples of the procedure of forming an unstretched film include (a) a procedure of forming a high molecular weight polymer into a film, and then dyeing the film with the composition of the present invention, and (b) a procedure of adding the composition of the present invention into a solution of a high molecular weight polymer, dyeing the stock solution, and forming a film from the solution. These dyeing, film-forming, and stretching can be carried out by common methods described below.

In the procedure (a), the polymer film is dipped into a dye bath containing the composition of the present invention, and, as required, inorganic salts such as sodium chloride and sodium sulfate and dyeing aids such as a surfactant, and then, if required, is treated with boric acid, and is dried. The temperature of the dye bath during dipping is generally 20°C or more and preferably 30°C or more, and generally 80°C or less and preferably 50°C or less. The dipping time in the dye bath is generally 1 minute or more and preferably 3 minutes or more, and generally 60 minutes or less and preferably 20 minutes or less.

In the procedure (b), a dyed film is made by dissolving a high molecular weight polymer in water and/or a hydrophilic organic solvent such as alcohol, glycerol, and dimethylformamide, adding the composition of the present invention to carry out solution dyeing, and forming a film from this dyed solution by casting, solution coating, or extrusion, for example. The concentration of high molecular weight polymer dissolved in the solvent is varied depending on the kind of high molecular weight polymer, and generally about 5% by weight or more and preferably about 10% by weight or more, and generally about 30% by weight or less and preferably about 20% by weight or less. The concentration of the dye dissolved in the solvent is generally about 0.1% by weight or more and preferably about 0.8% by weight or more, and generally about 5% by weight or less and preferably about 2.5% by weight or less on the basis of the high molecular weight polymer.

The resultant unstretched film is uniaxially stretched by an appropriate method. The stretching treatment aligns

dye molecules, which exhibits dichroism. Examples of the uniaxial stretching method include wet tensile stretching, dry tensile stretching, and dry inter-roll compression stretching, any of which may be used. The stretching is conducted at a stretching ratio in the range of 2 to 9 times, and preferably in the range of generally 2.5 to 6 times when polyvinyl alcohol and a derivative thereof is used as a high molecular weight polymer.

After the stretching alignment, the film is treated with boric acid for purposes of improvement of water resistance and the degree of polarization of the stretched film. The boric acid treatment increases the light transmittance and the degree of polarization of the anisotropic dye film. The conditions of boric acid treatment are varied depending on the kind of hydrophilic high molecular weight polymer and dye used. Typically, the boric acid concentration is generally about 1% by weight or more and preferably about 5% by weight or more, and generally about 15% by weight or less and preferably about 10% by weight or less. The desirable treatment temperature is generally 30°C or more and preferably 50°C or more, and generally 80°C or less. When the concentration of boric acid is less than 1% by weight or the treatment temperature is less than 30°C, treatment effects are small, and when the concentration of boric acid is above 15% by weight or the treatment temperature is over 80°C, the anisotropic dye film is fragile, which are not preferred.

Preferably, the thickness of the anisotropic dye film obtained by a dry film-forming process is generally 10 μm or more and especially 30 μm or more, and generally 200 μm or less and especially 100 μm or less.

(ii) Wet Film-Forming Process:

Various known wet film-forming processes can be used, for example a process of film-forming by preparing the composition of the present invention as a coating solution, applying the solution on various kinds of substrate such as a glass plate, drying the film, and aligning and depositing the dye.

Examples of the substrates include glass and films such as triacetate, acrylic, polyester, triacetyl cellulose or urethane-based films. An aligning treatment layer may be provided on the surface of the substrate by a known method described in "Ekishou Binran (Liquid Crystal Handbook)", pages 226 to 239 (published on October 30th, 2000 by Maruzen Co. , Ltd.), for controlling the aligning direction of the dichroic dye.

In the wet film-forming process, the preferred concentration of the dye in the composition of the present invention is generally 0.1% by weight or more and especially 1% by weight or more, and generally 50% by weight or less and especially 30% by weight or less. A significantly low concentration of the dye cannot produce sufficient dichroism, and a significantly high concentration of the dye precludes film formation.

Examples of the coating methods include known methods described in "Coating Engineering" by Yuji Harazaki, pages 253 to 277 (published on March 20th, 1971 by Asakura Shoten) and "Bunshi Kyouchou Zairyou no Sousei to Ouyou (Creation and Applications of Harmonized Molecular Materials)" supervised by Kunihiro Ichimura, pages 118 to 149 (published on March 3rd, 1998 by CMC Publishing Co., Ltd.), and a method of coating on a pre-aligned substrate by spin coating, spray coating, bar coating, roll coating and blade coating methods. The preferred temperature in coating is generally 0°C or more and preferably 80°C or less, and the preferred humidity is generally 10% RH or more and 80% RH or less.

The temperature in drying the coated film is preferably 0°C or more and 120°C or less, and the humidity is preferably about 10% RH or more and about 80% RH or less.

When an anisotropic dye film is formed on a substrate by a wet film-forming process, the film thickness after drying the resulting anisotropic dye film is generally 50 nm or more and especially 100 nm or more, and generally 50 μm or less, especially 20 μm or less, and preferably 1 μm or less.

(iii) Protective Layer

The anisotropic dye film of the present invention obtained by the dry film-forming process or the wet film-forming process is used with a protective layer as necessary. The protective layer is formed by laminating transparent polymeric films such as triacetate, acrylic, polyester, polyimide, triacetyl cellulose or urethane films on the anisotropic dye film of the present invention, which is put into practical use.

[III-3. Physical Properties of Anisotropic Dye Film]

In view of its physical properties, the anisotropic dye film of the present invention comprises satisfying at least one of the following physical properties (a) and (b).

(a) A tilt angle of 10° or less, which is determined from the ratio of polarized absorptions in the following two directions (i) and (ii) with respect to a stretching vibration of $SO_3$ at around 970 $cm^{-1}$ (hereinafter sometimes referred to as simply "ratio of polarized absorptions in the two directions"); and

(b) A value YY/YZ of 1.8 or more, which is the ratio of polarized absorptions in the following two directions (i) and (ii) with respect to CH out-of-plane bending vibration at 800 to 900 $cm^{-1}$:

(i) the direction of maximum absorption of visible light, and
(ii) the direction of maximum transmission of the visible light.

These physical properties (a) and (b) can be measured respectively as follows:

(a) The tilt angle determined from the ratio of polarized absorptions in the two directions with respect to a stretching vibration of the $SO_3$ at around 970 $cm^{-1}$:

The direction of maximum absorption of visible light, which is parallel to the film surface of the anisotropic dye film, is the direction X and the direction of maximum transmission of the visible light is the direction Y.

For a peak intensity Ax at around 970 $cm^{-1}$ in an infrared absorption spectrum resulting from perpendicular incidence of infrared light polarized in the direction X to the film surface, and a peak intensity Ay at around 970 $cm^{-1}$ in an infrared absorption spectrum resulting from perpendicular incidence of infrared light polarized in the direction Y to the film surface, the tilt angle can be calculated according to the following equation:

[Equation 3]

$$\text{Tilt angle} = \frac{180}{\pi} \cdot \tan^{-1}\left(\sqrt{\frac{Ay}{Ax}}\right)$$

(b) The ratio YY/YZ of polarized absorptions in the two directions with respect to CH out-of-plane bending vibration at 800 to 900 $cm^{-1}$:

The direction of maximum absorption of visible light, which is parallel to the film surface of the anisotropic dye film, is the direction X and the direction of maximum transmission of the visible light is the direction Y.

Let each peak intensity be YYi (wherein i = 1 to n) when peaks extending at the region from 800 to 900 $cm^{-1}$ due to C-H out-of-plane bending vibration in an infrared absorption spectrum resulting from incidence of infrared light polarized in the direction Y with a tilt of 60° toward the direction X are decomposed into n peaks by the Lorentzian fit.

Similarly, let each peak intensity be YZi (wherein i = 1 to n) when peaks extending at the region from 800 to 900 $cm^{-1}$ due to C-H out-of-plane bending vibration in an infrared absorption spectrum resulting from incidence of the infrared light polarized in the direction Y with a tilt of 60° toward the direction Y are decomposed into n peaks by the Lorentzian fit.

The peak position and peak width at the half height of the YYi are ensured to be the same as those of the YZi.

From the obtained YYi (wherein i = 1 to n) and YZi (wherein i = 1 to n), the ratio of YY/YZ can be calculated according to the following equation:

[Equation 4]

$$\text{Ratio of } YY/YZ = \left(\sum_{i=1}^{n} YYi/YZi\right) \Big/ n$$

[IV. Polarizing Element]

The polarizing element of the present invention includes the anisotropic dye film of the present invention. Specifically, for forming polarizing filters for a variety of display devices such as LCDs and OLEDs, the anisotropic dye film of the present invention may be formed directly on an electrode substrate to construct these display devices, for example, or may be formed on a substrate, which is used as a constituent for the display devices.

The anisotropic dye film of the present invention can function as a polarizing film to generate linearly polarized light, circularly polarized light, or elliptically polarized light utilizing its anisotropy in light absorption, or further can function as a film showing various anisotropies such as refraction anisotropy and conduction anisotropy depending on selection of a film-forming process and a composition containing a substrate or a dye. Thus, such films can be used as various kinds of polarizing element in a variety of applications.

The polarizing element of the present invention comprising an anisotropic dye film of the present invention may include the direct anisotropic dye film formed on a substrate, and also the anisotropic dye film as a laminate made by

laminating such protective layers as mentioned above and layers having various functions by a wet film-forming process or the like, such as an adhesive layer, and or layers having optical functions as an antireflective layer, an alignment layer, and a phase retardation film, a brightness improving film, a reflective film, a transflective film, and a diffusion film, for example.

The layers having such optical functions can be formed by, for example, the following methods.
The layer having functions as a phase retardation film can be formed by the stretching treatment described in Japanese Patent Nos. 2841377 and 3094113, or the treatment described in Japanese Patent No. 3168850, for example.

The layer having functions as a brightness improving film can be formed by forming micropores by the method described in Japanese Patent Application Laid-Open Nos. 2002-169025 and 2003-29030, or by superposing two or more cholesteric liquid crystal layers having different central wavelength in the selective reflection, for example.

The layer having functions as a reflective film or a transflective film can be obtained by forming a thin metallic film through vapor deposition or sputtering.
The layer having functions as a diffusion film can be formed by coating the protective layer with a resin solution containing particulates.

The layer having functions as a phase retardation film or an optical compensation film can be formed by applying and aligning liquid crystal compounds such as a discotic liquid crystal compound and a nematic liquid crystal compound.

[Examples]

The present invention will now be described in more detail by reference to the following examples, however, it is not limited to these examples unless departing from its sprit.
"Part (s) " as used in the description below represents refers to "part(s) by weight".

In each example and comparative example, the dichroic ratio of the anisotropic dye film was determined by measuring the transmittance of an anisotropic dye film with a spectrophotometer having an iodine-based polarizing element disposed in an incident optical unit and calculating according to the following equation:

$$\text{Dichroic ratio (D)} = Az/Ay$$

$$Az = -\log (Tz)$$

$$Ay = -\log (Ty)$$

Tz: Transmittance of the anisotropic dye film to the polarized light in the direction of the absorption axis
Ty: Transmittance of the anisotropic dye film to the polarized light in the direction of the polarization axis

The tilt angle determined from the ratio of polarized absorptions in the two directions with respect to a stretching vibration of $SO_3$ at around 970 $cm^{-1}$ and the ratio YY/YZ of polarized absorptions in the two directions with respect to CH out-of-plane bending vibration at 800 to 900 $cm^{-1}$ were obtained by the method described in [III-3. Physical Properties of the Anisotropic Dye Film]. The infrared absorption spectrum of the anisotropic dye film was measured by a spectrophotometer NEXUS670 made by Thermo Electron.

[Example 1]

To 72 parts of water, 25 parts of lithium salt of a dye represented by the following formula (I-1) and 3 parts of an electron-deficient discotic compound represented by the following formula (II-1) were added and dissolved with stirring. Some insoluble materials were then removed by filtration to give a composition for an anisotropic dye film (the composition of the present invention). The composition was applied onto a polyimide alignment layer on a surface of a glass substrate (75 mm x 25 mm, 1.1 mm thick) using an applicator with a gap of 5 μm (available from Imoto Seisakusho), the polyimide alignment layer being formed by spin coating, having 80 nm thickness, and previously been subjected to rubbing with a cloth. After air drying the coating, an anisotropic dye film (the anisotropic dye film of the present invention) was prepared.

[Compound 22]

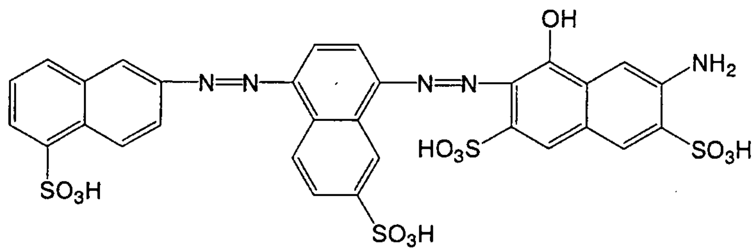

(I－1)

[Compound 23]

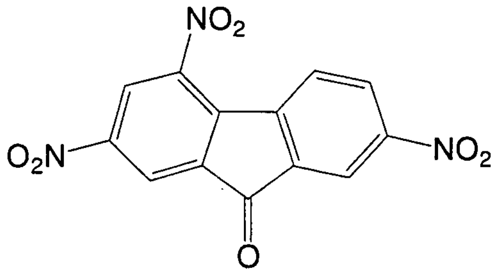

(II－1)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Example 2]

To 69 parts of water, 30 parts of lithium salt of the dye represented by the formula (I-1) and 1 part of an electron-deficient discotic compound represented by the following formula (II-2) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 24]

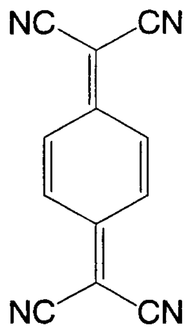

(II-2)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Example 3]

To 69 parts of water, 30 parts of lithium salt of the dye represented by the formula (I-1) and 1 part of an electron-deficient discotic compound represented by the following formula (II-3) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 25]

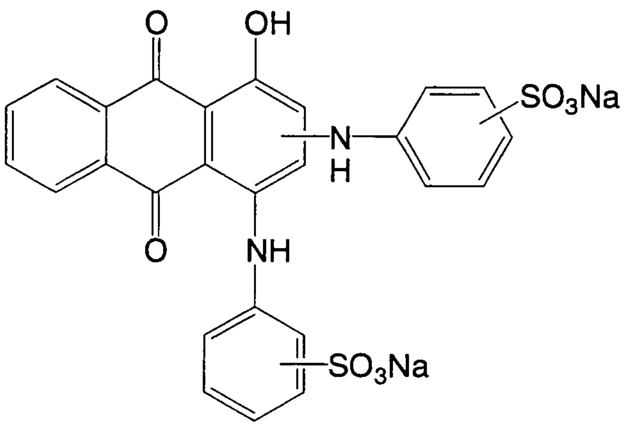

(II-3)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Example 4]

To 69 parts of water, 30 parts of lithium salt of the dye represented by the formula (I-1) and 1 part of an electron-deficient discotic compound represented by the following formula (II-4) were added and dissolved with stirring. Some insoluble materials were then removed by filtration to give a composition for an anisotropic dye film (the composition of

the present invention). The composition was applied onto a substrate that was the same as that in Example 1 using an applicator with a gap of 5 μm (available from Imoto Seisakusho). After air drying the coating, an anisotropic dye film (the anisotropic dye film of the present invention) was prepared.

[Compound 26]

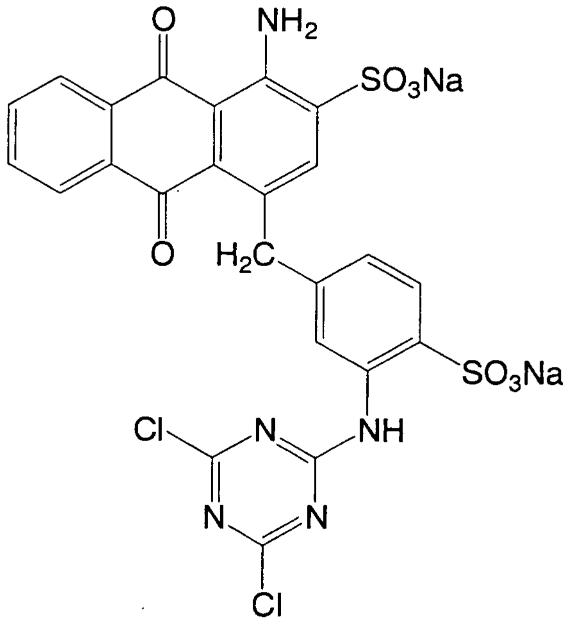

(II-4)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Example 5]

To 66 parts of water, 33 parts of lithium salt of the dye represented by the formula (I-1) and 1 part of an electron-deficient discotic compound represented by the following formula (II-5) were added and dissolved with stirring. Some insoluble materials were then removed by filtration to give a composition for an anisotropic dye film (the composition of the present invention). The composition was applied onto a substrate that was the same as that in Example 1, as in Example 4. After air drying the coating, an anisotropic dye film (the anisotropic dye film of the present invention) was prepared.

[Compound 27]

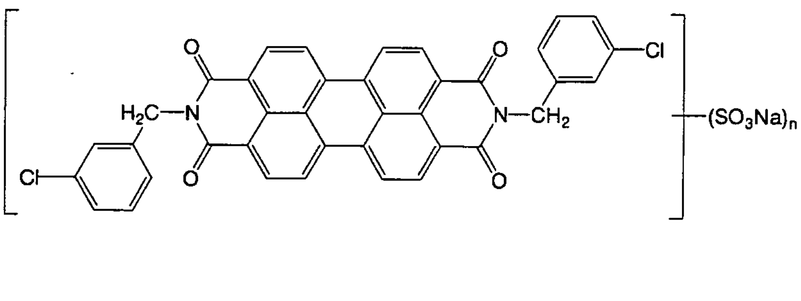

(II-5)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Example 6]

To 70.3 parts of water, 27 parts of lithium salt of the dye represented by the formula (I-1) and 2.7 parts of an electron-deficient discotic compound represented by the following formula (II-6) were added and dissolved with stirring. Some insoluble materials were then removed by filtration to give a composition for an anisotropic dye film (the composition of the present invention). The composition was applied onto a substrate that was the same as that in Example 1, as in Example 4. After air drying the coating, an anisotropic dye film (the anisotropic dye film of the present invention) was prepared.

[Compound 28]

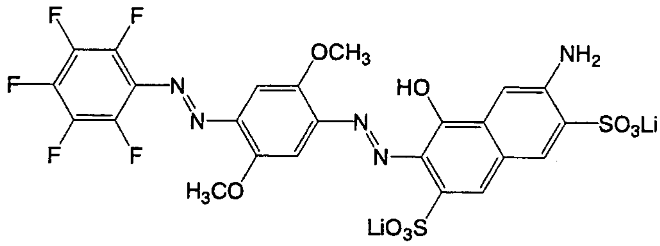

(II − 6)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Comparative Example 1]

To 63 parts of water, 37 parts of lithium salt of the dye represented by the formula (I-1) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 2 below shows the results. The anisotropic dye film of this comparative example had only a low dichroic ratio (light absorption anisotropy) compared to the anisotropic dye films of Examples 1 to 6.

[Example 7]

To 82 parts of water, 16 parts of sodium salt of a dye represented by the following formula (I-2) and 2 parts of an electron-deficient discotic compound represented by the following formula (II-7) were added and dissolved with stirring. Some insoluble materials were then removed by filtration to give a composition for an anisotropic dye film (the composition of the present invention). The composition was applied onto a substrate that was the same as that in Example 1 using an applicator with a gap of 10 μm (available from Imoto Seisakusho). After air drying the coating, an anisotropic dye film (the anisotropic dye film of the present invention) was prepared.

[Compound 29]

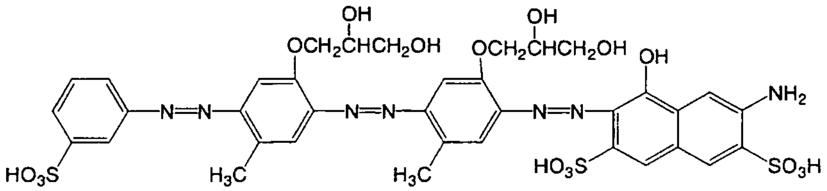

(I − 2)

[Compound 30]

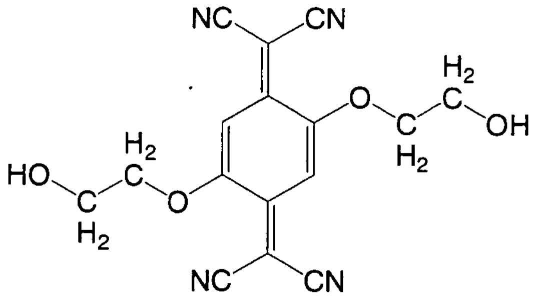

(II − 7)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Comparative Example 2]

To 85 parts of water, 15 parts of sodium salt of the dye represented by the formula (1-2) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 2 below shows the results. The anisotropic dye film of this comparative example had only a low dichroic ratio (light absorption anisotropy) compared to the anisotropic dye film of Example 7.

[Example 8]

To 75 parts of water, 24 parts of lithium salt of a dye represented by the following formula (I-3) and 1 part of an electron-deficient discotic compound represented by the following formula (II-8) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 31]

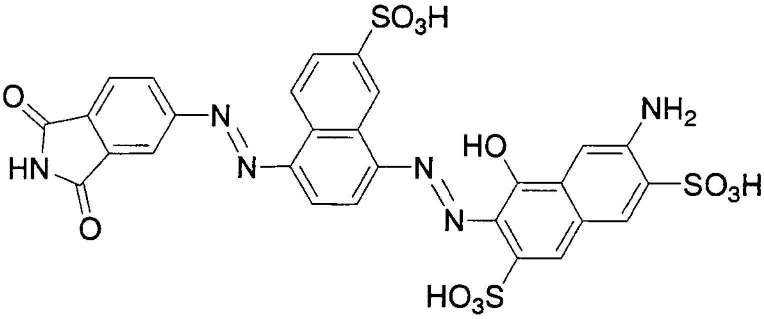

(I-3)

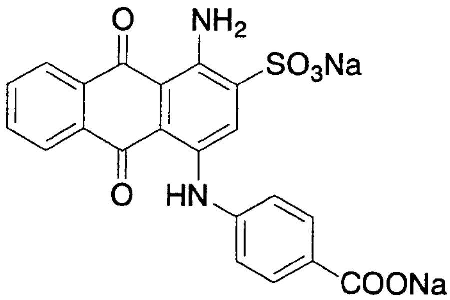

(II-8)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Comparative Example 3]

To 80 parts of water, 20 parts of lithium salt of the dye represented by the formula (1-3) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 2 below shows the results. The anisotropic dye film of this comparative example had only a low dichroic ratio (light absorption anisotropy) compared to the anisotropic dye film of Example 8.

[Example 9]

To 79 parts of water, 20 parts of lithium salt of a dye represented by the following formula (I-4) and 1 part of an electron-deficient discotic compound represented by the following formula (II-9) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 32]

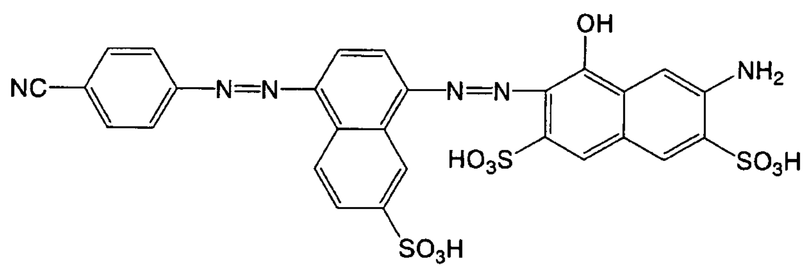

(I-4)

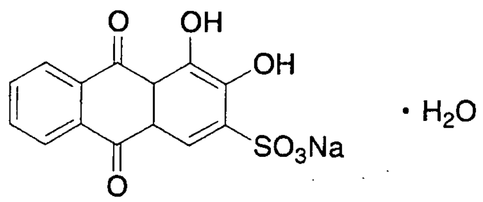

(II-9)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

The tilt angle determined from the ratio of polarized absorptions in the two directions with respect to a stretching vibration of $SO_3$ at around 970 $cm^{-1}$ was 7.54°, and the ratio YY/YZ of polarized absorptions in the two directions with respect to CH out-of-plane bending vibration at 800 to 900 $cm^{-1}$ was 1.85.

[Comparative Example 4]

To 80 parts of water, 20 parts of lithium salt of the dye represented by the formula (I-4) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 2 below shows the results. The anisotropic dye film of this comparative example had only a low dichroic ratio (light absorption anisotropy) compared to the anisotropic dye film of Example 9.

The tilt angle determined from the ratio of polarized absorptions in the two directions with respect to a stretching vibration of $SO_3$ at around 970 $cm^{-1}$ was 11.65°, and the ratio YY/YZ of polarized absorptions in the two directions with respect to CH out-of-plane bending vibration at 800 to 900 $cm^{-1}$ was 1.77.

[Example 10]

To 84 parts of water, 15 parts of lithium salt of a dye represented by the following formula (I-5) and 1 part of an electron-deficient discotic compound represented by the following formula (II-10) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 33]

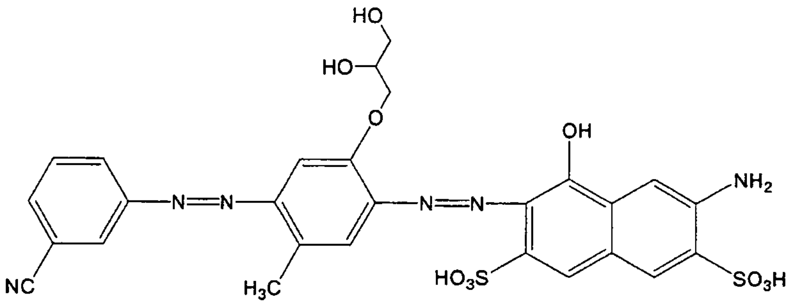

(I－5)

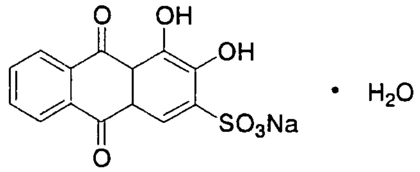

(II－10)

The resultant anisotropic dye film was subjected to measurement of the maximum absorption wavelength (λmax) and the dichroic ratio (D). Table 2 below shows the results. The anisotropic dye film of this example had a high dichroic ratio (light absorption anisotropy) sufficient to function as a polarizing film.

[Comparative Example 5]

To 85 parts of water, 15 parts of lithium salt of the dye represented by the formula (I-5) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.
The resultant anisotropic dye film was subjected to measurement of the maximum absorption wavelength (λmax) and the dichroic ratio (D). Table 2 below shows the results. The anisotropic dye film of this comparative example had only a low dichroic ratio (light absorption anisotropy) compared to the anisotropic dye film of Example 10.

[Example 11]

To 81 parts of water, 18 parts of lithium salt of a dye represented by the following formula (1-6) and 1 part of an electron-deficient discotic compound represented by the following formula (II-11) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 34]

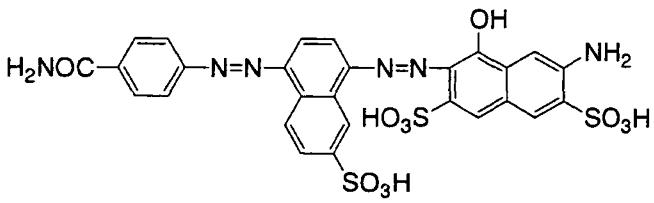

(I-6)

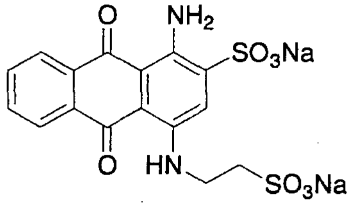

(II-11)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

The tilt angle determined from the ratio of polarized absorptions in the two directions with respect to a stretching vibration of $SO_3$ at around 970 $cm^{-1}$ was 9.56°, and the ratio YY/YZ of polarized absorptions in the two directions with respect to CH out-of-plane bending vibration at 800 to 900 $cm^{-1}$ was 1.92.

[Comparative Example 6]

To 84 parts of water, 16 parts of lithium salt of the dye represented by the formula (1-6) alone without any electron-deficient discotic compound (materials for the present invention) was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 11.

[Example 12]

To 81 parts of water, 18 parts of lithium salt of a dye represented by the following formula (I-7) and 1 part of an electron-deficient discotic compound represented by the following formula (II-12) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 35]

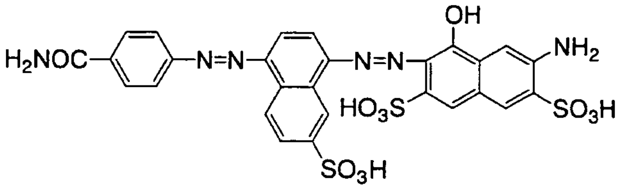

( I − 7 )

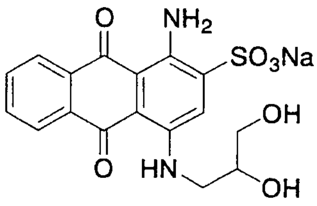

(II− 1 2)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

The tilt angle determined from the ratio of polarized absorptions in the two directions with respect to a stretching vibration of $SO_3$ at around 970 $cm^{-1}$ was 9.72°, and the ratio YY/YZ of polarized absorptions in the two directions with respect to CH out-of-plane bending vibration at 800 to 900 $cm^{-1}$ was 1.94.

[Comparative Example 7]

To 84 parts of water, 16 parts of lithium salt of the dye represented by the formula (I-7) alone without any electron-deficient discotic compound (materials for the present invention) was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 12.

[Example 13]

To 84 parts of water, 15 parts of lithium salt of a dye represented by the following formula (I-8) and 1 part of an electron-deficient discotic compound represented by the following formula (II-13) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 36]

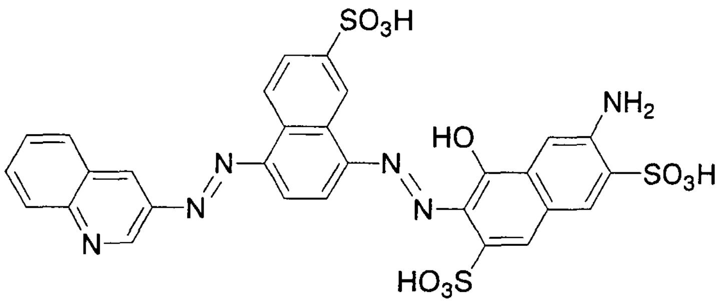

(I－8)

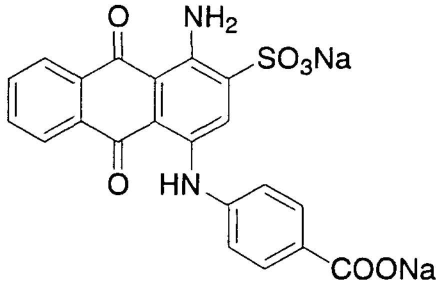

(II－13)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 8]

To 86 parts of water, 14 parts of lithium salt of a dye represented by the formula (1-8) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 13.

[Example 14]

To 70 parts of water, 24 parts of lithium salt of a dye represented by the following formula (I-9) and 6 parts of an electron-deficient discotic compound represented by the following formula (II-14) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 37]

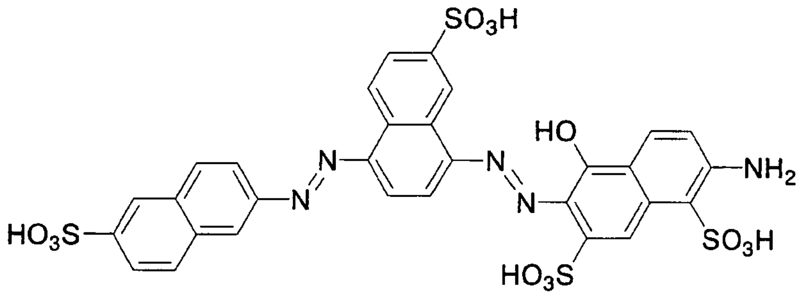

(I-9)

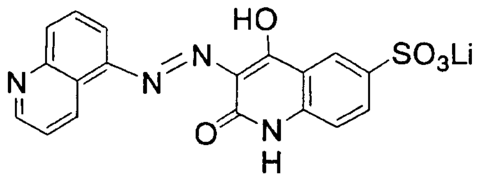

(II-14)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 9]

To 65 parts of water, 35 parts of lithium salt of the dye represented by the formula (I-9) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 14.

[Example 15]

To 80 parts of water, 12 parts of lithium salt of a dye represented by the following formula (I-10) and 8 parts of an electron-deficient discotic compound represented by the following formula (II-15) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 38]

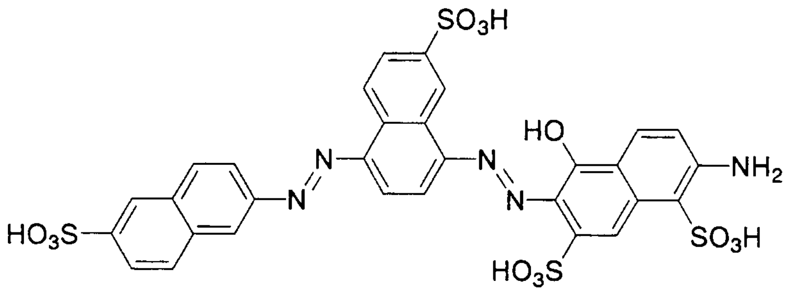

(I-10)

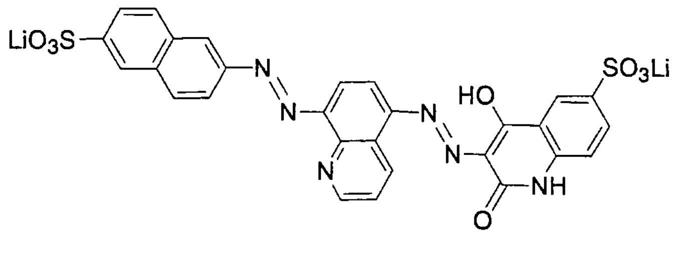

(II-15)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 10]

To 65 parts of water, 35 parts of lithium salt of the dye represented by the formula (I-10) alone without any electron-deficient discotic compound was added and dissolved with stirring. Some insoluble materials were then removed by filtration to give a composition for an anisotropic dye film. The composition was applied onto a substrate that was the same as that in Example 1, in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 15.

[Example 16]

To 80 parts of water, 10.4 parts of lithium salt of a dye represented by the following formula (I-11) and 9.6 parts of an electron-deficient discotic compound represented by the following formula (II-16) were added and dissolved with stirring. Some insoluble materials were then removed by filtration to give a composition for an anisotropic dye film (the composition of the present invention). The composition was applied onto a substrate that was the same as that in Example 1, in Example 1. After air drying the coating, an anisotropic dye film (the anisotropic dye film of the present invention) was prepared.

[Compound 39]

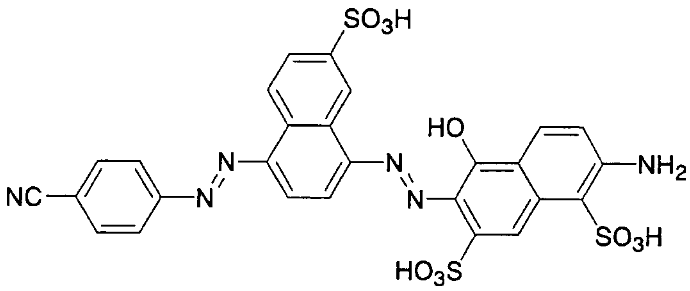

(I-11)

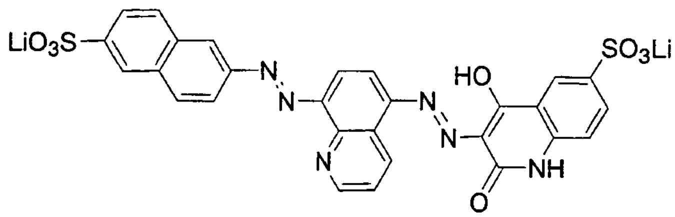

(II-16)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 11]

To 80 parts of water, 20 parts of lithium salt of a dye represented by the formula (I-11) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 16.

[Example 17]

To 75 parts of water, 13 parts of lithium salt of a dye represented by the following formula (1-12) and 12 parts of an electron-deficient discotic compound represented by the following formula (II-17) (materials for the present invention) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 40]

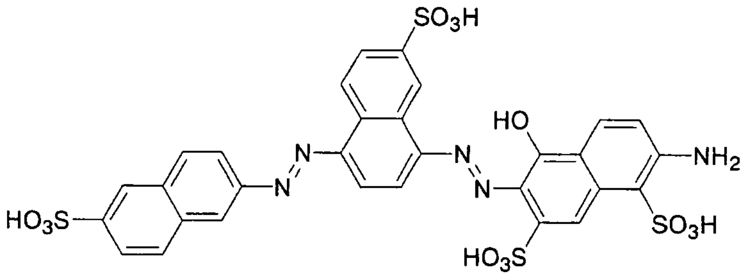

(I-12)

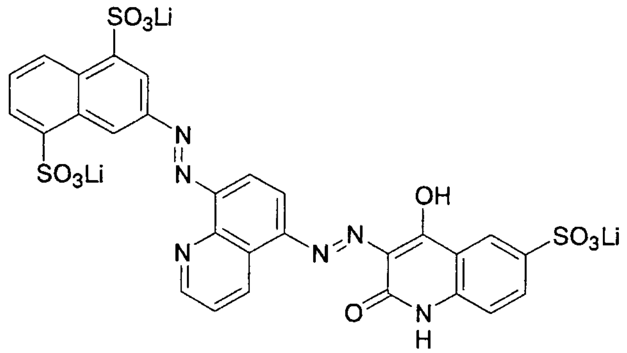

(II-17)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 12]

To 65 parts of water, 35 parts of lithium salt of a dye represented by the formula (1-12) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 17.

[Example 18]

To 80 parts of water, 10 parts of lithium salt of a dye represented by the following formula (1-13) and 10 parts of an electron-deficient discotic compound represented by the following formula (II-18) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 41]

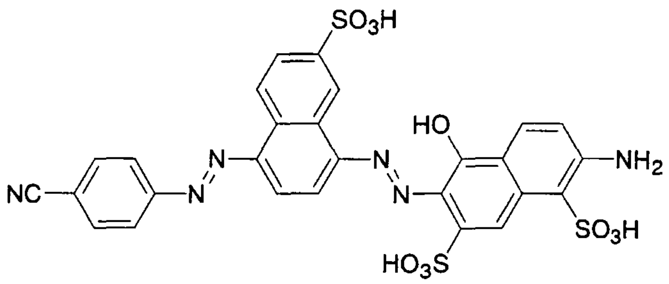

(I－1 3)

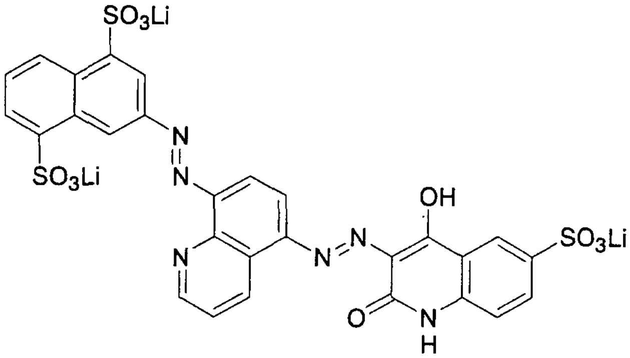

(II－1 8)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 13]

To 80 parts of water, 20 parts of lithium salt of a dye represented by the formula (1-13) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 18.

[Example 19]

To 80 parts of water, 10.4 parts of lithium salt of a dye represented by the following formula (1-14) and 9.6 parts of an electron-deficient discotic compound represented by the following formula (II-19) were added and dissolved with stirring. Some insoluble materials were then removed by filtration to give a composition for an anisotropic dye film (the composition of the present invention). The composition was applied onto a substrate that was the same as that in Example 1, as in Example 1. After air drying the coating, an anisotropic dye film (the anisotropic dye film of the present invention) was prepared.

[Compound 42]

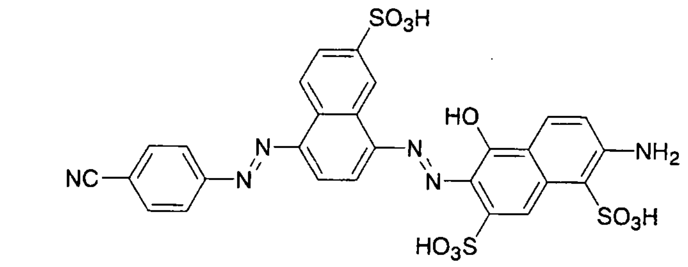

(I - 1 4)

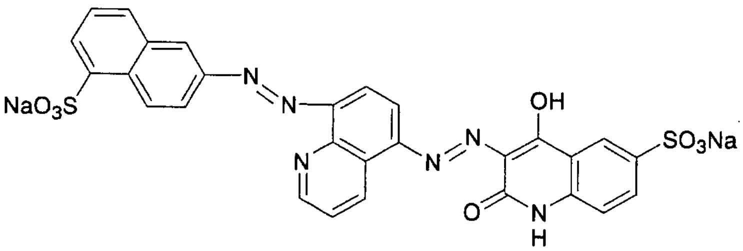

(II - 1 9)

The resultant anisotropic dye film was subjected to measurement of the maximum absorption wavelength (λmax) and the dichroic ratio (D). Table 3 below shows the results. The anisotropic dye film of this example had a high dichroic ratio (light absorption anisotropy) sufficient to function as a polarizing film.

[Comparative Example 14]

To 80 parts of water, 20 parts of lithium salt of a dye represented by the formula (I-14) alone without any electron-deficient discotic compound was added and dissolved with stirring. Some insoluble materials were then removed by filtration to give a composition for an anisotropic dye film. The composition was applied onto a substrate that was the same as that in Example 1, as in Example 1. After air drying the coating, an anisotropic dye film was prepared.

The resultant anisotropic dye film was subjected to measurement of the maximum absorption wavelength (λmax) and the dichroic ratio (D). Table 3 below shows the results. The anisotropic dye film of this comparative example had only a low dichroic ratio (light absorption anisotropy) compared to the anisotropic dye film of Example 19.

[Table 2]

Table 2

| Anisotropic Dye Film | Dye | Electron-Deficient Discotic Compound | Results | |
|---|---|---|---|---|
| | | | Maximum Absorption Wavelength (nm) | Dichroic Ratio |
| Example 1 | (I-1) | (II-1) | 600 | 36 |
| Example 2 | | (II-2) | 600 | 40 |
| Example 3 | | (II-3) | 600 | 40 |
| Example 4 | | (II-4) | 600 | 32 |
| Example 5 | | (II-5) | 600 | 56 |
| Example 6 | | (II-6) | 600 | 34 |
| Comparative Example 1 | | none | 600 | 25 |
| Example 7 | (1-2) | (II-7) | 590 | 41 |
| Comparative Example 2 | | none | 590 | 14 |
| Example 8 | (I-3) | (II-8) | 620 | 40 |
| Comparative Example 3 | | none | 620 | 24 |

(continued)

| Anisotropic Dye Film | Dye | Electron-Deficient Discotic Compound | Results | |
|---|---|---|---|---|
| | | | Maximum Absorption Wavelength (nm) | Dichroic Ratio |
| Example 9 | (1-4) | (II-9) | 620 | 40 |
| Comparative Example 4 | | none | 620 | 21 |
| Example 10 | (I-5) | (II-10) | 600 | 56 |
| Comparative Example 5 | | none | 600 | 7 |

[Table 3]

Table 3

| Anisotropic Dye Film | Dye | Electron-Deficient Discotic Compound | Results | |
|---|---|---|---|---|
| | | | Maximum Absorption Wavelength (nm) | Dichroic Ratio |
| Example 11 | (1-6) | (II-11) | 620 | 73 |
| Comparative Example 6 | | none | 620 | 48 |
| Example 12 | (I-7) | (II-12) | 620 | 60 |
| Comparative Example 7 | | none | 620 | 48 |
| Example 13 | (I-8) | (II-13) | 625 | 54 |
| Comparative Example 8 | | none | 625 | 40 |
| Example 14 | (I-9) | (II-14) | 600 | 16 |
| Comparative Example 9 | | none | 600 | 2 |
| Example 15 | (I-10) | (II-15) | 600 | 14 |
| Comparative Example 10 | | none | 600 | 2 |
| Example 16 | (1-11) | (II-16) | 600 | 16 |
| Comparative Example 11 | | none | 600 | 9 |
| Example 17 | (1-12) | (II-17) | 600 | 11 |
| Comparative Example 12 | | none | 600 | 2 |
| Example 18 | (I-13) | (II-18) | 600 | 11 |
| Comparative Example 13 | | none | 600 | 9 |
| Example 19 | (I-14) | (II-19) | 600 | 23 |
| Comparative Example 14 | | none | 600 | 9 |

Although the present invention has been described in detail with reference to particular embodiments thereof, it is apparent to those skilled in the art that various changes can be made thereto without departing from the spirit and scope of the present invention.

The present application is based on Japanese Patent Application No. 2005-123764 filed on April 21, 2005 and Japanese Patent Application No. 2006-116724 filed on April 20, 2006, which are herein incorporated in their entireties by reference.

Industrial Applicability

The anisotropic dye film of the present invention can be used as a polarizing film to generate linearly polarized light, circularly polarized light, or elliptically polarized light by means of its anisotropy in light absorption. The film can also function as a film showing various anisotropies such as reflection anisotropy and conduction anisotropy depending on selection of a film-forming process and a composition containing a substrate or a dye. Thus, such films can be used as various kinds of polarizing element in a variety of applications.

## Claims

1. A composition for an anisotropic dye film comprising:

    an electron-deficient discotic compound and an electron-rich compound.

2. The composition for the anisotropic dye film according to claim 1, wherein the electron-rich compound is a dye.

3. The composition for the anisotropic dye film according to claim 2, wherein the dye is an azo dye.

4. The composition for the anisotropic dye film according to any one of claims 1 to 3, wherein the electron-deficient discotic compound is an aromatic compound or an azaheterocyclic compound.

5. The composition for the anisotropic dye film according to any one of claims 1 to 3, wherein the electron-deficient discotic compound is an anthraquinone derivative or an azo dye having a partial structure of an anthraquinone derivative.

6. The composition for the anisotropic dye film according to any one of claims 1 to 5, further comprising a solvent.

7. An anisotropic dye film comprising the composition for the anisotropic dye film according to any one of claims 1 to 6.

8. An anisotropic dye film comprising an electron-deficient discotic compound and an electron-rich compound.

9. An anisotropic dye film having a tilt angle of 10° or less, the tilt angle being determined from the ratio of polarized absorptions in the following directions (i) and (ii) with respect to a stretching vibration of $SO_3$ at around 970 $cm^{-1}$:

    (i) the direction of maximum absorption of visible light, and
    (ii) the direction of maximum transmission of the visible light.

10. An anisotropic dye film having a value YY/YZ of 1.8 or more, the value being the ratio of polarized absorptions in the following directions (i) and (ii) with respect to CH out-of-plane bending vibration at 800 to 900 $cm^{-1}$:

    (i) the direction of maximum absorption of visible light, and
    (ii) the direction of maximum transmission of the visible light.

11. A polarizing element comprising the anisotropic dye film according to any one of claims 7 to 10.

**INTERNATIONAL SEARCH REPORT**

International application No.
PCT/JP2006/308429

A. CLASSIFICATION OF SUBJECT MATTER
*G02B5/30*(2006.01)i, *C09B31/08*(2006.01)i, *C09B31/22*(2006.01)i

According to International Patent Classification (IPC) or to both national classification and IPC

B. FIELDS SEARCHED

Minimum documentation searched (classification system followed by classification symbols)
G02B5/30, C09B31/08, C09B31/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 54-76171 A (Mitsubishi Electric Corp.), 18 June, 1979 (18.06.79), Full text (Family: none) | 1-11 |
| A | JP 62-123405 A (Sumitomo Chemical Co., Ltd.), 04 June, 1987 (04.06.87), Full text; all drawings & US 4859039 A1 & EP 182632 A2 | 1-11 |
| A | JP 61-275704 A (Sumitomo Kasei Kogyo Kabushiki Kaisha), 05 December, 1986 (05.12.86), Full text; all drawings (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 July, 2006 (31.07.06) | 15 August, 2006 (15.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2400877 A
- JP 2841377 B
- JP 3094113 B
- JP 3168850 B
- JP 2002169025 A
- JP 2003029030 A
- JP 2005123764 A
- JP 2006116724 A


### Non-patent literature cited in the description


- **J. F. DREYER.** The Fixing of Molecular Orientation. *Physical and Colloid Chemistry,* 1948, vol. 52, 808
- **J. F. DREYER.** Light Polarization from Films of Lyotropic Nematic Liquid Crystals. *Journal de Physique,* 1969, vol. 4, 114
- **J. LYDON.** Chromonic Liquid Crystal Phases. *Current Opinion in Colloid & Interface Science,* 1998, vol. 3, 458-466
- **C. A. HUNTER et al.** The Nature of $\pi$-$\pi$ Interactions. *Journal of the American Chemical Society,* 1990, vol. 112, 5525
- **C. A. HUNTER et al.** Aromatic Interactions. *Journal of the Chemical Society, Perkin Transactions 2,* 2001, 651
- **H. TANAKA et al.** Tetra(tert-butyl)phthalocyanine Cooper-Iodine Complex Film with Large Dichroism Induced by Shear. *Chemical Communications,* 1994, 1851, Journal of the Chemical Society
- **K. PIETERSE et al.** An Electron-Deficient Discotic Liquid-Crystalline Material. *Chemistry of Materials,* 2001, vol. 13, 2675
- **J. H. WILLIAMS.** The Molecular Electric Quadrupole Moment and Solid-State Architecture. *Acc. Chem. Res.,* 1993, vol. 26, 593
- **J. ALMLOF et al.** The electric structure of the azabenzenes an AB initioMO-SCF-LCAO study. *J. Electron Spectroscopy and Related Phenomena,* 1973, vol. 2, 51
- **J. W. EMSLEY et al.** Multiple contributions to potentials of mean torque for solutes dissolved in liquid crystal solvents. *Liquid Crystals,* 1991, vol. 9, 649
- **D. H. SUTTER ; W. H. FLYGARE.** The Molecular Zeeman Effect. *Topics in Current Chemistry,* 1976, vol. 63, 89
- **A. CHABLO et al.** Quadrupole Moment Calculations for Some Aromatic Hydrocarbons. *Chemical Physics Letters,* 1981, vol. 78, 424
- **A. D. BUCKINGHAM.** *Advances in Chemical Physics,* 1967, vol. 12, 107
- **M. A. BATES et al.** Computer Simulation Studies of Anisotropic Systems XXIX. Quadrupolar Gay-Berne Discs and Chemically Induced Liquid Crystal Phases. *Liquid Crystals,* 1998, vol. 24 (2), 229
- **O. R. LOZMAN et al.** Complementary Polytopic Interactions (CPI) as Revealed by Molecular Modeling using the XED Force Field. *Journal of the Chemical Society, Perkin Transactions 2,* 2001, 1446
- Additives for Coating. Willey-VCH, 2000
- Ekishou Binran. Maruzen Co. , Ltd, 30 October 2000, 226-239
- **YUJI HARAZAKI.** Coating Engineering. Asakura Shoten, 20 March 1971, 253-277
- **KUNIHIRO ICHIMURA.** Bunshi Kyouchou Zairyou no Sousei to Ouyou. CMC Publishing Co., Ltd, 03 March 1998, 118-149